# EUROPEAN PATENT APPLICATION

(11) **EP 4 671 034 A1**
(43) Date of publication of application: **31.12.2025**
(21) Application number: 25180525.5
(22) Date of filing: 03.06.2025
(51) Int. Cl.: B60L 53/10, B60L 53/16, B60L 53/20, B60L 53/66

(54) **METHODS AND APPARATUS FOR CHARGING WITH DIRECT CURRENT AND ALTERNATING CURRENT**

(30) Priority: 25.06.2024 US 202463663762 P; 15.11.2024 US 202418949400
(71) Applicant: Deere & Company, Moline, IL 61265 (US)
(72) Inventor: HATKAR, CHETAN MANOHAR, 68163 Mannheim (DE); KANDKE, SUDIP RAMCHANDRA, 68163 Mannheim (DE); JHA, GAURAV KUMAR, 68163 Mannheim (DE)
(74) Representative: Holst, Sönke

(57) **Abstract**

Systems, apparatus, articles of manufacture, and methods are disclosed to charge an energy storage device on a vehicle. The system includes instructions to detect direct current or alternating current on or at an input terminal of a vehicle electrical system, the input terminal to receive electrical energy to charge the energy storage device on the vehicle; based on detection of direct current, generate a first pilot signal that includes a first pulse width modulated signal associated with a first mode including a first duty cycle range; based on detection of alternating current, generate a second pilot signal that includes a second pulse width modulated signal associated with a second mode including a second duty cycle range, wherein the first duty cycle range is lower than the second duty cycle range; and charge the energy storage device based on detection of the first pilot signal or the second pilot signal.

## Description

This disclosure relates generally to chargers and methods of charging and, more particularly, to methods and apparatus for charging with direct current and alternating current.

### BACKGROUND

In recent years, charging stations have conformed to charging standards, such as the North American Charging Standard (NACS) and the Combined Charging System (CCS). The NACS and the CCS support different electrical connector configurations. The NACS and the CCS configurations differ based on whether charging occurs using alternating current (AC) source or direct current (DC) source. Accordingly, a charging station may not support charging with both an NACS and CCS configuration, and, therefore, may not support charging with both AC and DC voltage. Currently, a charger is configured based on whether the input is AC voltage (e.g., at a lower current) or DC voltage (e.g., at a higher current). Therefore, chargers ultimately accept only AC or DC voltage for charging based on the configuration of the charger (e.g., the set of pins the charger has for accepting AC or DC voltage).

### BRIEF DESCRIPTION OF THE DRAWINGS

FIG. 1 is a block diagram of an example environment in which an example controller circuitry and an example charger circuitry operate to dynamically charge a battery via a charging station on a vehicle.
FIG. 2 is a block diagram of an example implementation of the controller circuitry and the charger circuitry of FIG. 1.
FIG. 3 is a first example block diagram of a charging station connected to a vehicle electrical system.
FIG. 4 is a second example block diagram of the charging station connected to the vehicle electrical system.
FIG. 5 is a first flowchart representative of example machine-readable instructions and/or example operations that may be executed, instantiated, and/or performed by example programmable circuitry to implement the controller circuitry and the charger circuitry of FIG. 2 in the configuration of FIG. 4.
FIG. 6 is a second flowchart representative of example machine-readable instructions and/or example operations that may be executed, instantiated, and/or performed by example programmable circuitry to implement the controller circuitry and the charger circuitry of FIG. 2 in the configuration of FIG. 4.
FIG. 7A is a third flowchart representative of example machine-readable instructions and/or example operations that may be executed, instantiated, and/or performed by example programmable circuitry to implement the controller circuitry and the charger circuitry of FIG. 2 in the configuration of FIG. 4.
FIG. 7B is a fourth flowchart representative of example machine-readable instructions and/or example operations that may be executed, instantiated, and/or performed by example programmable circuitry to implement the controller circuitry and the charger circuitry of FIG. 2 in the configuration of FIG. 4.
FIG. 8 is a first example state chart of the charging station and the vehicle electrical system of FIG. 4.
FIG. 9A is an example of a relay in an off state that can be implemented in the configuration of FIG. 4.
FIG. 9B is an example of a relay in an on state that can be implemented in the configuration of FIG. 4.
FIG. 10 is a third example block diagram of the charging station connected to the vehicle electrical system.
FIG. 11 is a fourth example block diagram of the charging station connected to the vehicle electrical system.
FIG. 12A is a fifth flowchart representative of example machine-readable instructions and/or example operations that may be executed, instantiated, and/or performed by example programmable circuitry to implement the controller circuitry and the charger circuitry of FIG. 2 in the configuration of FIG. 11.
FIG. 12B is a sixth flowchart representative of example machine-readable instructions and/or example operations that may be executed, instantiated, and/or performed by example programmable circuitry to implement the controller circuitry and the charger circuitry of FIG. 2 in the configuration of FIG. 11.
FIG. 13 is a second example state chart of the charging station and the vehicle electrical system of FIG. 11.
FIG. 14 is an example diagram of an example connector of the charging station of FIG. 1.
FIG. 15 is a fifth example block diagram of the charging station connected to the vehicle electrical system.
FIG. 16 is a sixth example block diagram of the charging station connected to the vehicle electrical system.
FIG. 17 is a block diagram of an example processing platform including programmable circuitry structured to execute, instantiate, and/or perform the example machine-readable instructions and/or perform the example operations of FIGS. 5-7B and 12A-12B to implement the controller circuitry and the charger circuitry of FIG. 2.
FIG. 18 is a block diagram of an example implementation of the programmable circuitry of FIG. 17.
FIG. 19 is a block diagram of another example implementation of the programmable circuitry of FIG. 17.

In general, the same reference numbers will be used throughout the drawing(s) and accompanying written description to refer to the same or like parts. The figures are not necessarily to scale. Instead, the thickness of the layers or regions may be enlarged in the drawings.

### DETAILED DESCRIPTION

As the configuration of chargers (e.g., the configuration of input terminals of the charger, etc.) differ based on alternating current (AC) and direct current (DC) charging methods, charging stations are typically dedicated to either AC charging or DC charging. Disclosed herein are example charging stations and on-board chargers that support charging with direct current or alternating current, and which have improved detection of availability of AC charging, DC charging, or unavailability of charging.

Accordingly, as disclosed herein, a system for charging an energy storage device (e.g., a battery, etc.) on a vehicle supports common input terminals for AC and DC charging. The system includes a vehicle electrical system with common input terminals for receiving electrical energy as DC voltage or AC voltage from a charging station to charge the energy storage device on the vehicle. On a charging station, a sensor (e.g., a current sensor, a voltage sensor, etc.) is configured to detect: (a) the DC or the AC voltage from the charging station on or at the common input terminals, or (b) a user-defined entry (e.g., a user-defined selection) of DC or AC voltage from a user interface of the charging station (e.g., a user-defined switch state, an electronic display of the charging station, etc.).

On the charging station, a charge controller is configured to generate a control pilot (CP) signal that includes a first pulse width modulated (PWM) signal associated with a first mode in response to detection of DC voltage on the common input terminals or a user-selection of DC voltage charging. In other examples, the charger controller is configured to generate the CP signal that includes a second PWM signal associated with a second mode in response to detection of AC voltage on the common input terminals or a user selection of AC voltage charging.

The first mode includes a first duty cycle range, and the second mode includes a second duty cycle range, wherein the first duty cycle range is lower than the second duty cycle range. In some examples, the first mode can include a DC charging mode. In these examples, the second mode includes an AC charging mode.

In the vehicle electrical system, an on-board charger (OBC) has a communications port that is configured to establish communications between the charge controller of the charging station, the vehicle electrical system, and a duty-cycle detection module (e.g., controller circuitry of the vehicle) to interpret the CP signal. In the vehicle electrical system, at least one switch (e.g., a double-pole switch; a double-throw switch; a set of double-pole, single-throw switches/relays; a single-pole contactor; etc.) is responsive to the OBC's interpretation of the CP signal to control a first state of the switch to operate in the first mode.

Operation in the first mode further includes that the received DC voltage is directed from the input terminals to the energy storage device of the vehicle electrical system via switched terminals of the switch in the first state. The DC voltage is directed from the input terminals if a battery management system (BMS) authorizes charging (e.g., fast DC charging) of the energy storage device based on the respective time-varying charge state of the energy storage device. "Fast DC charging" mode refers to a DC charging mode in which the electrical power per unit time, which is transferred from the charging station to the energy storage system of the vehicle electrical system exceeds a charging threshold, where the charging threshold is based on the electrical power per unit time associated with a reference AC charging mode.

In the vehicle electrical system, the at least one switch is responsive to the OBC's interpretation of the CP signal to control a second state of the switch to operate in the second mode. In the second mode, a received AC voltage is directed from the input terminals to the OBC via the switched terminals of the switch in the second state. The AC voltage is directed from the input terminals if the BMS authorizes charging (e.g., AC charging) of the energy storage device based on the respective time-varying charge state of the energy storage device. In the vehicle electrical system, the OBC is coupled to the energy storage device, wherein the OBC includes a rectifier or an inverter that is configured to convert the received alternating current AC voltage to DC voltage for application to the energy storage device if the at least one switch is in the second state.

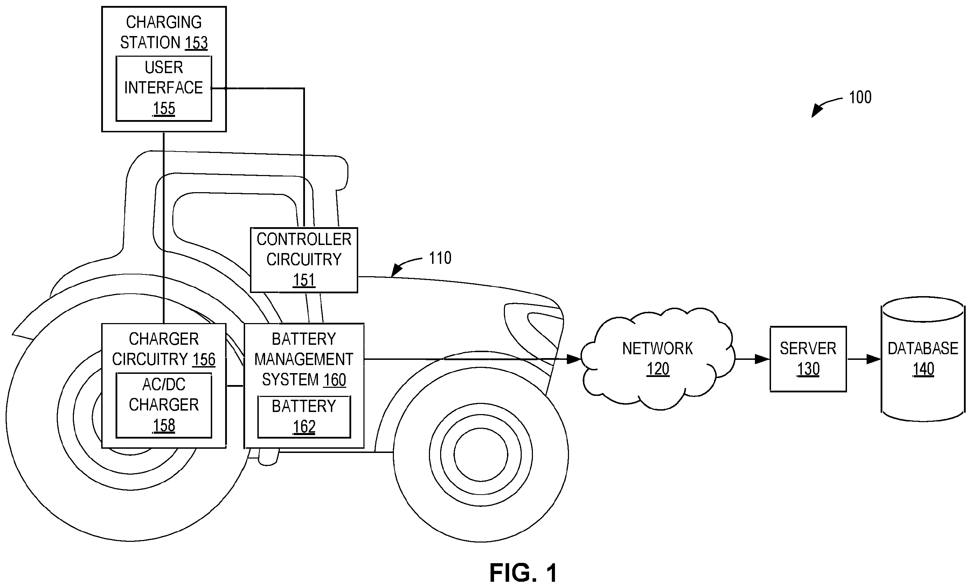

FIG. 1 is an example block diagram of an example environment 100 in which an example vehicle 110 operates via a network connection 120 to a server 130 to dynamically charge an energy storage device of the vehicle 110. As used herein, dynamically charge refers to charging based on a received DC voltage and/or a received AC voltage. Further, the server 130 is connected to a database 140 to store data related to operations to dynamically charge the energy storage device.

As shown in the example of FIG. 1, the vehicle 110 includes example controller circuitry 151, example charger circuitry 156, an example AC/DC charger 158, an example BMS 160, and an example battery 162. The vehicle 110 is in communication with an example charging station 153 that includes an example user interface 155.

The example vehicle 110 of FIG. 1 may be an agricultural vehicle (e.g., a tractor, a front loader, a harvester, a cultivator, a mower, or any other suitable vehicle), a construction vehicle, a forestry vehicle, or other work vehicle. In the example of FIG. 1, the vehicle 110 is represented as a tractor; however, other vehicles may additionally or alternatively be included. The vehicle 110 can move between different locations and over different terrain.

The example network 120 of FIG. 1 shuttles communication between the server 130 and the example vehicle 110. The example network 120 may be implemented by wireless communication, satellite communication, or other suitable communication modes.

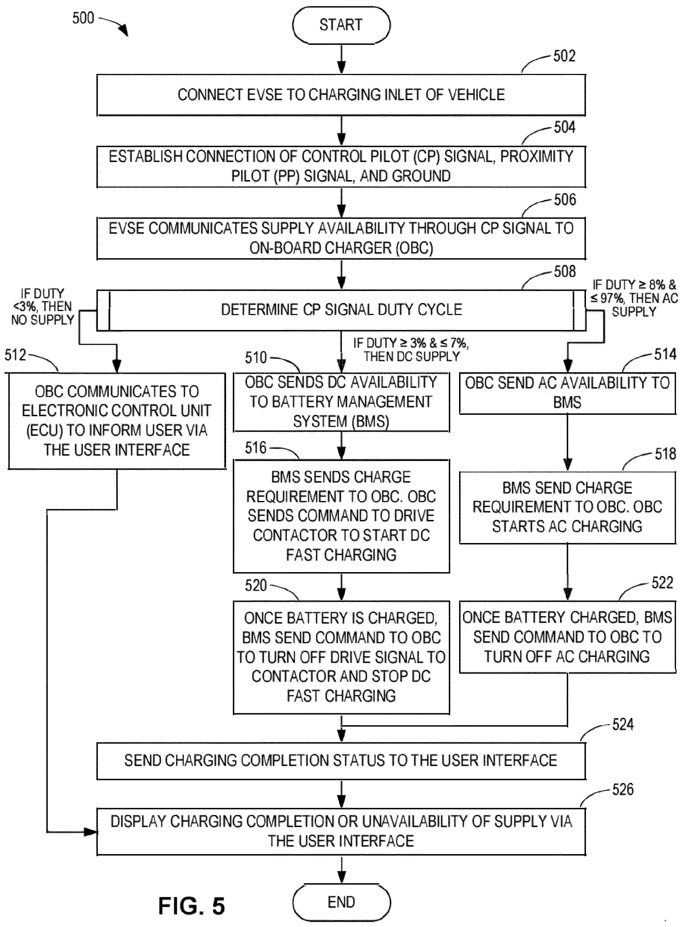

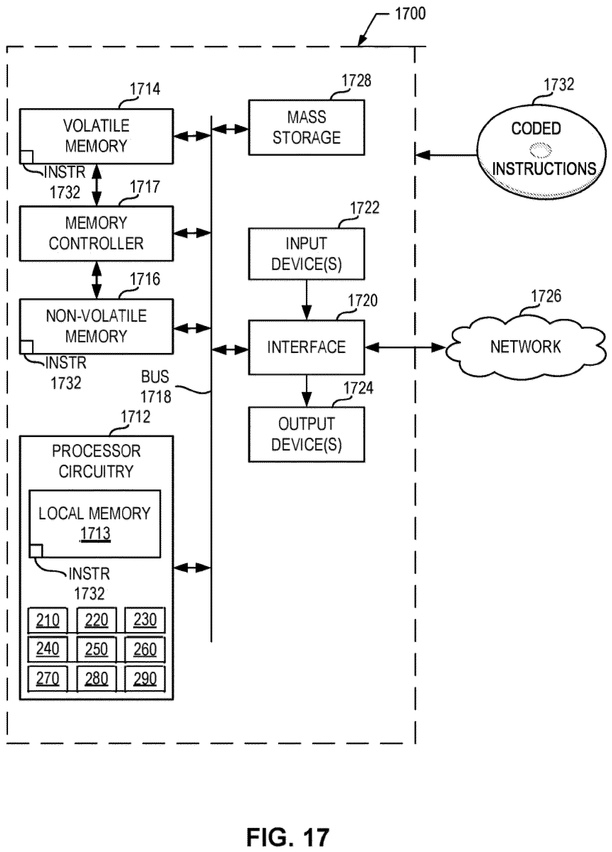

The example server 130 of FIG. 1 may be instantiated, implemented, or performed as described in connection with the processor circuitry of FIGS. 17-19. The example server 130 may communicate with the processor circuitry (e.g., the controller circuitry 151, the charger circuitry 156, etc.) of the vehicle 110. Further, the example server 130 may store information regarding logic to perform the flowcharts of FIGS. 5-7B and 12A-12B in the database 140 and/or may control the operations performed by the processor circuitry of the vehicle 110.

The example database 140 of FIG. 1 stores information concerning charging requirements, weld requirements, charging modes, logic operations, etc., for use by the server 130 and/or the processor circuitry of the vehicle 110. The example database 140 may be implemented by magnetic storage devices (e.g., floppy disk, drives, Hard Disk Drives (HDDs), etc.), optical storage devices (e.g., Blu-ray disks, Compact Disks (CDs), Digital Versatile Disks (DVDs), etc.), Redundant Array of Independent Disks (RAID) systems, and/or solid-state storage discs or devices such as flash memory devices and/or solid-state drive (SSD).

While in the example of FIG. 1, the server 130 and the database 140 are shown as separate from the vehicle 110, in other examples the functionality described herein as associated with the server may be implemented within the vehicle 110. For example, the vehicle 110 may be equipped with processing power, such as a server, and data storage, such as a database, to implement the functions associated with the server 130 and the database 140 described herein.

The example vehicle 110 includes the controller circuitry 151. The controller circuitry 151 controls the charging of at least one of the battery 162 and/or any other energy storage device connected to the vehicle 110.
The controller circuitry 151 interprets at least one of a received input signal (e.g., received via a user interface 155 or received by a sensor on the charging station 153). The input signal determines whether charging occurs via a first mode (e.g., DC voltage) or a second mode (e.g., AC voltage).

After determination of whether to perform AC or DC voltage charging (e.g., charge via the first mode or the second mode) based on the received input signal, the controller circuitry 151 sends a signal for the charger circuitry 156 to charge at least one of the battery 162 located within the BMS 160 via the AC/DC charger 158. The AC/DC charger 158 charges the battery 162 based on the received signal. In some examples, the AC/DC charger 158 charges the battery in a first mode using DC voltage based on the received signal indicating an availability of DC voltage from the charging station 153. In other examples, the AC/DC charger 158 charges the battery 162 in a second mode based on the received signal indicating an availability of AC voltage from the charging station 153.

The BMS 160 monitors the health of the battery 162 and/or other connected electrical storage devices. In some examples, the BMS 160 monitors whether a battery is charged, the level of battery charge, and other indicators of system and/or battery health. Further, while one battery 162 is shown in the illustrated example of FIG. 1, more than one battery 162 and/or one or more electrical storage devices (e.g., fuel cell, supercapacitor, etc.) may be included in the BMS 160 and/or the vehicle 110.

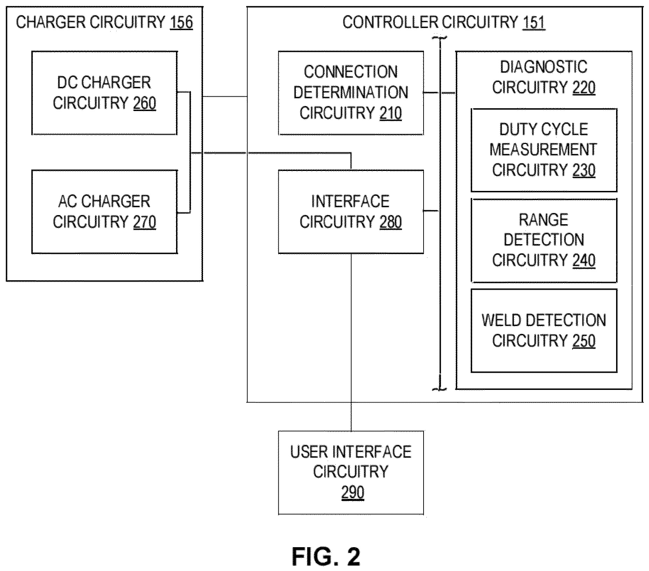

FIG. 2 is a block diagram of an example implementation of the controller circuitry 151 and the charger circuitry 156 of FIG. 1 to dynamically charge at least one an electrical storage device and/or the battery 162 of the vehicle 110 of FIG. 1. The controller circuitry 151 and the charger circuitry 156 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the controller circuitry 151 and the charger circuitry 156 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The controller circuitry 151 includes example connection determination circuitry 210. The connection determination circuitry 210 determines whether a connection between a connector of a charging station (e.g., the charging station 153 of FIG. 1, etc.) and a charging inlet of the vehicle is sufficient for charging. In some examples, the connection determination circuitry 210 determines whether the connection is sufficient based on a threshold level of signals (e.g., CP signal, proximity pilot (PP) signal, etc.) from the charging station to the vehicle (e.g., whether a signal strength meets, exceeds, or otherwise satisfies a threshold). After determining that the connection is sufficient, the connection determination circuitry 210 sends a signal (e.g., a CP signal) to the OBC (e.g., the charger circuitry 156, etc.) of the vehicle. In some examples, the connection determination circuitry 210 sends the signal for a determination of a charging mode. In these examples, the connection determination circuitry 210 sends a CP signal including whether DC voltage or AC voltage was received by the input terminals of the vehicle. In some examples, the connection determination circuitry 210 receives the CP signal from the charging station 153 and sends the CP signal to the diagnostic circuitry 220 for the determination of the charging. In some examples, the connection determination circuitry 210 is instantiated by programmable circuitry executing connection determination instructions and/or configured to perform operations such as those represented by the flowchart of FIG. 5 (e.g., blocks 502-506).

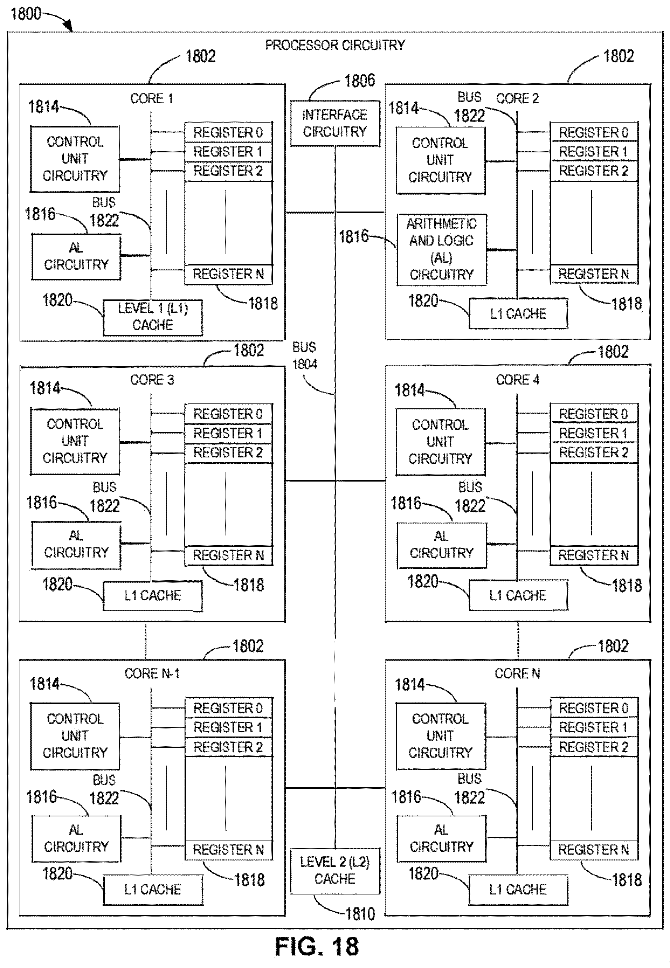

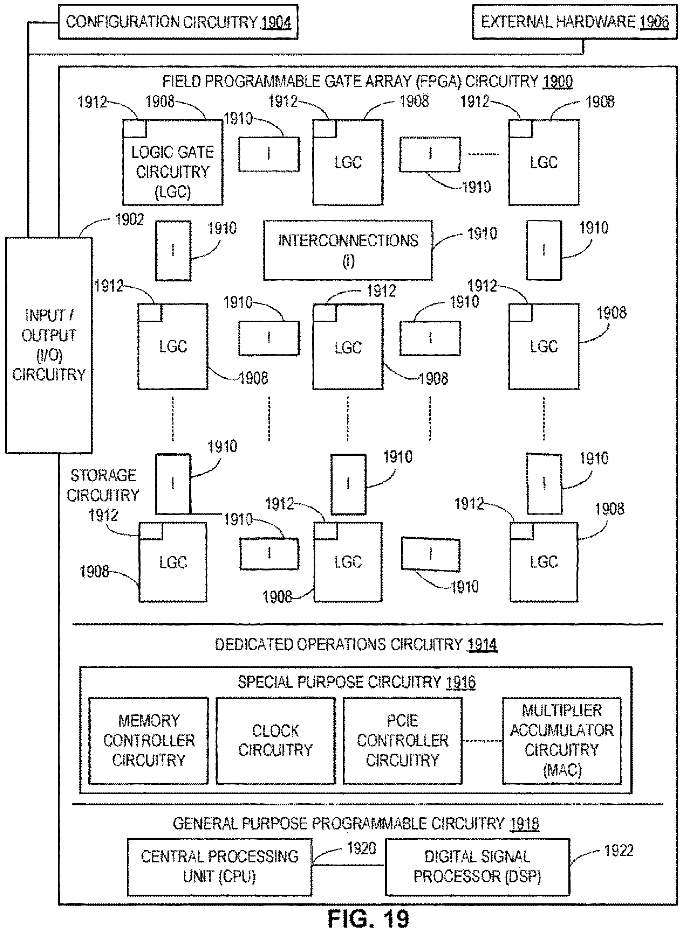

In some examples, the controller circuitry 151 includes means for determining a connection between a connector of a charging station and a charging inlet of the vehicle that is sufficient for charging. For example, the means for determining the connection may be implemented by connection determination circuitry 210. In some examples, the connection determination circuitry 210 may be instantiated by programmable circuitry such as the example programmable circuitry 1712 of FIG. 17. For instance, the connection determination circuitry 210 may be instantiated by the example microprocessor 1800 of FIG. 18 executing machine executable instructions such as those implemented by at least blocks 502-506 of FIG. 5. In some examples, the connection determination circuitry 210 may be instantiated by hardware logic circuitry, which may be implemented by an ASIC, XPU, or the FPGA circuitry 1900 of FIG. 19 configured and/or structured to perform operations corresponding to the machine-readable instructions. Additionally or alternatively, the connection determination circuitry 210 may be instantiated by any other combination of hardware, software, and/or firmware. For example, the connection determination circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

The controller circuitry 151 further includes example diagnostic circuitry 220. The diagnostic circuitry 220 includes example duty cycle measurement circuitry 230, example range detection circuity 240, and example weld detection circuitry 250. The diagnostic circuitry 220 performs diagnostics tests on the received signal (e.g., the CP signal) to determine a mode for charging. Further, the diagnostic circuitry 220 determines whether the vehicle is prepared for charging by evaluating welds of a charging system of the vehicle (e.g., a vehicle electrical system, charging circuitry 156, etc.). The diagnostic circuitry 220 determines, based on a signal of the energy source (e.g., the CP signal generated by the connection determination circuitry 210), the mode of charging for the battery (e.g., charging via the first mode (DC voltage) or the second mode (AC voltage)). In some examples, the diagnostic circuitry 220 determines that the vehicle electrical system is not prepared for charging (e.g., has a faulty weld, etc.), and sends a signal that the battery is not able to be charged. In some examples, the diagnostic circuitry 220 is instantiated by programmable circuitry executing diagnostic instructions and/or configured to perform operations such as those represented by the flowchart of FIG. 5 (block 508).

In some examples, the controller circuitry 151 includes means for performing diagnostic tests on the received signal and charging system of the vehicle. For example, the means for performing the diagnostic tests may be implemented by diagnostic circuitry 220. In some examples, the diagnostic circuitry 220 may be instantiated by programmable circuitry such as the example programmable circuitry 1712 of FIG. 17. For instance, the diagnostic circuitry 220 may be instantiated by the example microprocessor 1800 of FIG. 18 executing machine executable instructions such as those implemented by at least block 508 of FIG. 5. In some examples, the diagnostic circuitry 220 may be instantiated by hardware logic circuitry, which may be implemented by an ASIC, XPU, or the FPGA circuitry 1900 of FIG. 19 configured and/or structured to perform operations corresponding to the machine-readable instructions. Additionally or alternatively, the diagnostic circuitry 220 may be instantiated by any other combination of hardware, software, and/or firmware. For example, the diagnostic circuitry 220 may be implemented by at least one or more hardware circuits (e.g., processor circuitry, discrete and/or integrated analog and/or digital circuitry, an FPGA, an ASIC, an XPU, a comparator, an op-amp, a logic circuit, etc.) configured and/or structured to execute some or all of the machine-readable instructions and/or to perform some or all of the operations corresponding to the machine-readable instructions without executing software or firmware, but other structures are likewise appropriate.

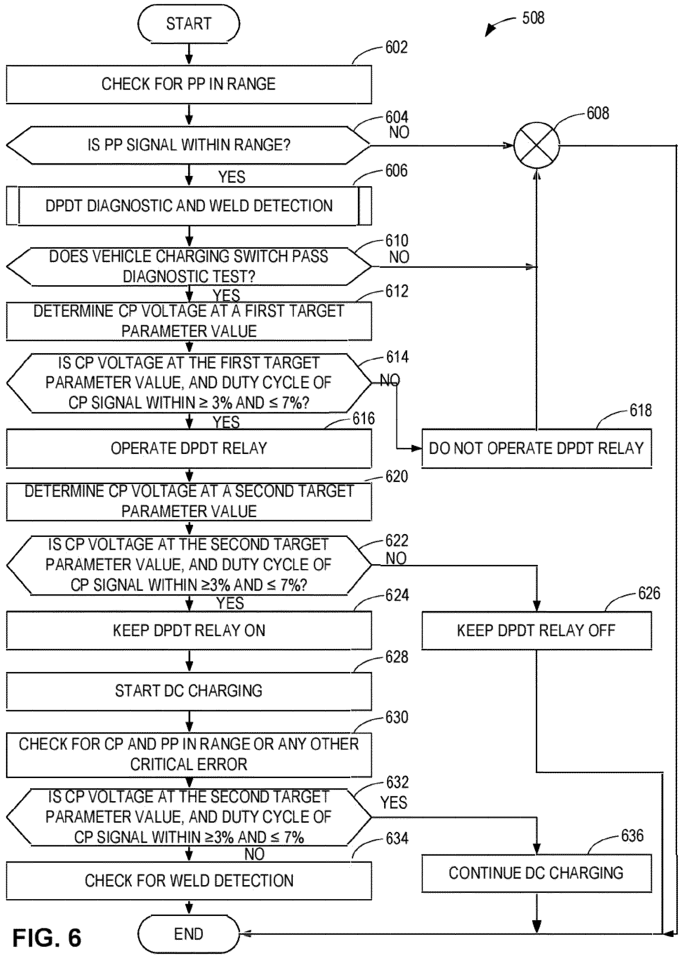

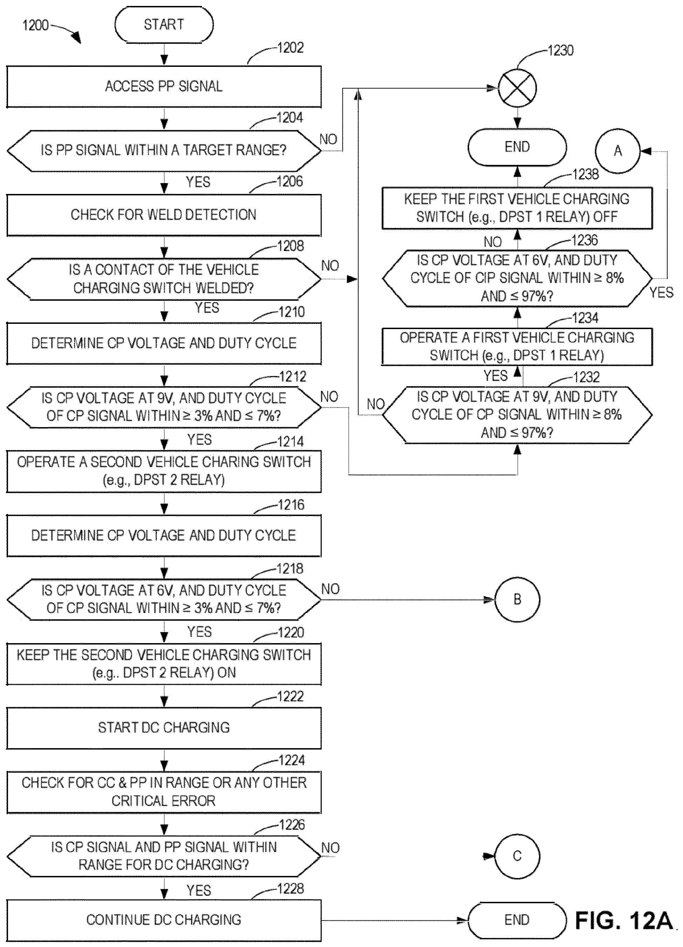

The diagnostic circuitry 220 further includes the duty cycle measurement circuitry 230. The duty cycle measurement circuitry 230 measures the duty cycle of the received signal to determine the mode of charging. In some examples, if the duty cycle is less than approximately 3%, the duty cycle measurement circuitry 230 determines not to charge the battery 162 and the supply from the charging station 153 is deemed unavailable (e.g., not connected properly via the connector, too weak, etc.). In some examples, if the duty cycle of the received signal is between approximately 3% to approximately 7%, the duty cycle measurement circuitry 230 determines to charge the battery 162 using DC voltage (e.g., the battery is charged in the first mode). In some examples, if the duty cycle of the received signal is between approximately 7% and approximately 8%, the duty cycle measurement circuitry 230 does not allow charging from the charging station 153. In other examples, if the duty cycle of the received signal is between approximately 8% and approximately 97%, the duty cycle measurement circuitry 230 determines to charge the battery 162 using AC voltage (e.g., the battery is charged in the second mode). In some examples, if the duty cycle of the received signal is greater than approximately 97%, the duty cycle measurement circuitry 230 does not allow charging from the charging station 153. As used herein, approximately is defined as plus or minus 10% tolerance of any percentage, value or parameter, unless specifically stated otherwise. In some examples, the duty cycle measurement circuitry 230 is instantiated by programmable circuitry executing duty cycle measurement instructions and/or configured to perform operations such as those represented by the flowchart of FIG. 5 (e.g., block 508), FIG. 6 (e.g., blocks 612-626), and FIGS. 12A-12B (e.g., blocks 1210, 1212, 1216, 1218, 1224, 1238, and 1256).

As used throughout this document, the CP signal includes a PWM signal, where the PWM or CP signal has a duty cycle that represents: (a) the ratio of the on duration of the pulse to the total period of a pulse, which has an on duration and an off duration for each period or cycle of the pulse, or (b) the pulse width duration divided by the total pulse period. For example, the duty cycle measurement circuitry 230 may use an integrator to demodulate the pulse to derive the pulse width duration, which can provide an amplitude level representative of the pulse width duration. The magnitude of the pulse of the PWM signal may represent a target voltage level that can be predefined as a one or more discrete target voltage levels, such as 3 Volts and 6 Volts, or 3 Volts, 6 Volts, 9 Volts and 12 Volts, although other voltage levels fall within the scope of the disclosure and appended claims. For example, the magnitude of the PWM signal may be set to have a first target voltage level (e.g., 6V) for one or more periods or sampling intervals of a pulse train of the PWM to represent a corresponding first state of the charging station 153. In other examples, the magnitude of the PWM signal may be set to have a second target voltage level (e.g., 9V) for one or more periods or sampling intervals of a pulse train of the PWM to represent a corresponding second state of the charging station 153.

In one example, the CP signal may include a PWM signal in which the PWM has a duty cycle range that corresponds to an AC mode (e.g., AC charging mode with a corresponding duty cycle of between approximately 8% to approximately 97%) or a DC mode (e.g., DC charging mode with a corresponding duty cycle of approximately 3% to approximately 7%). Further, the CP signal may include a PWM signal in which the PWM has a first duty cycle range (e.g., greater than approximately 8% duty cycle) that corresponds to an AC mode and a first maximum current for the AC mode; a second duty cycle range that corresponds to an AC mode and a second maximum current for the AC mode; and a third duty cycle range (e.g., less than approximately 97% duty cycle) that corresponds to an AC mode and a third maximum current for the AC mode.

In some examples, the controller circuitry 151 includes means for measuring the duty cycle of the received signal. For example, the means for measuring may be implemented by duty cycle measurement circuitry 230. In some examples, the duty cycle measurement circuitry 230 may be instantiated by programmable circuitry such as the example programmable circuitry 1712 of FIG. 17. For instance, the duty cycle measurement circuitry 230 may be instantiated by the example microprocessor 1800 of FIG. 18 executing machine executable instructions such as those implemented by at least block 508 of FIG. 5, blocks 612-626 of FIG. 6, and blocks 1210, 1212, 1216, 1218, 1224, 1238, and 1256 of FIGS. 12A-12B. In some examples, the duty cycle measurement circuitry 230 may be instantiated by hardware logic circuitry, which may be implemented by an ASIC, XPU, or the FPGA circuitry 1900 of FIG. 19 configured and/or structured to perform operations corresponding to the machine-readable instructions. Additionally or alternatively, the duty cycle measurement circuitry 230 may be instantiated by any other combination of hardware, software, and/or firmware. For example, the duty cycle measurement circuitry 230 may be implemented by at least one or more hardware circuits (e.g., processor circuitry, discrete and/or integrated analog and/or digital circuitry, an FPGA, an ASIC, an XPU, a comparator, an op-amp, a logic circuit, etc.) configured and/or structured to execute some or all of the machine-readable instructions and/or to perform some or all of the operations corresponding to the machine-readable instructions without executing software or firmware, but other structures are likewise appropriate.

The diagnostic circuitry 220 further includes the range detection circuitry 240. The range detection circuitry 240 determines that the received signal is within a threshold range of the vehicle. In some examples, the range detection circuitry 240 determines whether the received signal is at a threshold level and/or strength. The range detection circuitry 240 determines whether a critical error (e.g., lack of sufficient energy for charging, etc.) is present before the performance of charging. In some examples, the range detection circuitry 240 determines whether the connector is properly connected to the vehicle and/or whether the received signal is above or otherwise meets a threshold value. In some examples, the range detection circuitry 240 is instantiated by programmable circuitry executing range detection instructions and/or configured to perform operations such as those represented by the flowchart of FIG. 6 (e.g., blocks 602, 604, 630, 632) and FIG. 12A (e.g., blocks 1202 and 1204).

In some examples, the controller circuitry 151 includes means for determining the received signal is within a threshold range of the vehicle. For example, the means for determining the received signal is within the threshold range of the vehicle may be implemented by range detection circuitry 240. In some examples, the range detection circuitry 240 may be instantiated by programmable circuitry such as the example programmable circuitry 1712 of FIG. 17. For instance, the range detection circuitry 240 may be instantiated by the example microprocessor 1800 of FIG. 18 executing machine executable instructions such as those implemented by at least blocks 602, 604, 630, and 632 of FIG. 6 and blocks 1202 and 1204 of FIG. 12A. In some examples, the range detection circuitry 240 may be instantiated by hardware logic circuitry, which may be implemented by an ASIC, XPU, or the FPGA circuitry 1900 of FIG. 19 configured and/or structured to perform operations corresponding to the machine-readable instructions. Additionally or alternatively, the range detection circuitry 240 may be instantiated by any other combination of hardware, software, and/or firmware. For example, the range detection circuitry 240 may be implemented by at least one or more hardware circuits (e.g., processor circuitry, discrete and/or integrated analog and/or digital circuitry, an FPGA, an ASIC, an XPU, a comparator, an op-amp, a logic circuit, etc.) configured and/or structured to execute some or all of the machine-readable instructions and/or to perform some or all of the operations corresponding to the machine-readable instructions without executing software or firmware, but other structures are likewise appropriate.

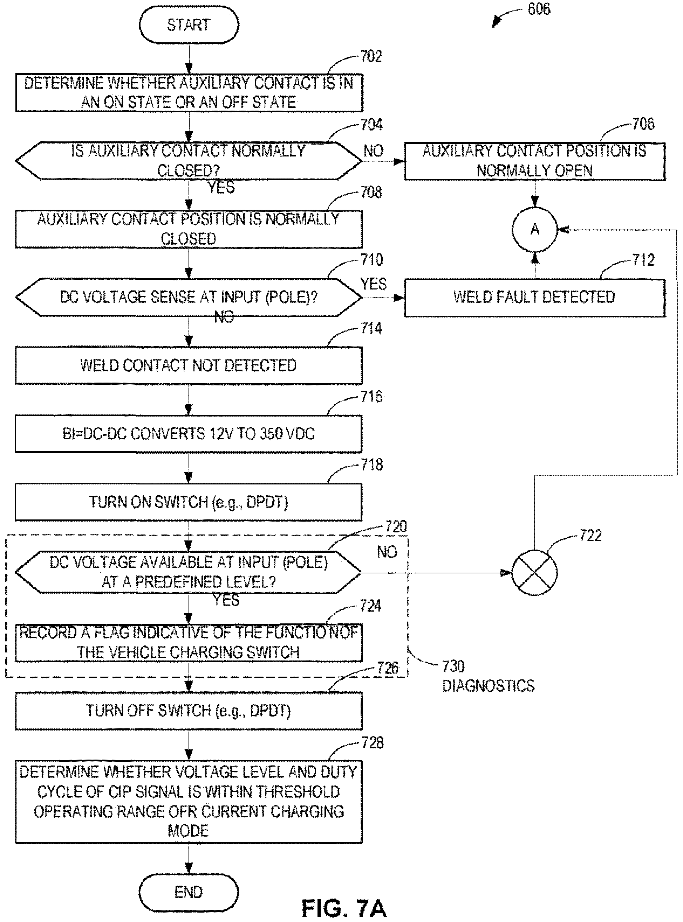

The diagnostic circuitry 220 further includes the weld detection circuitry 250. The weld detection circuitry 250 determines the status of a weld of a switch of the vehicle electrical system. The weld detection circuitry 250 determines whether the weld of the switch of the vehicle electrical system is within a normal operational range. In a normal operational range, the weld of the switch is operational between an on state and an off state (e.g., not in a fused state and/or other non-operational, non-functional state) and/or the switch responds/outputs voltage in response to a supplied voltage to the switch. In some examples, the weld detection circuitry 250 determines whether the weld of a contact of a switch is fused by heat and/or in an abnormally closed state that persists even if a coil or an actuator of the switch is activated to actuate the switch between an open and closed state. In some examples, the weld detection circuitry 250 determines an abnormal weld of the switch based on a lack of a response of the switch to a control signal, voltages at the output of the switch, and/or changes in state to auxiliary contacts in response to a control signal applied to the switch. After a determination by the weld detection circuitry 250 that the switch is not within the normal operational range, charging does not occur. In these examples, an error notification may be presented to the user via the user interface 155 regarding the status of one or more of the welds. In other examples, after a determination by the weld detection circuitry 250 that the switch is within the normal operational range, charging may proceed. In some examples, the weld detection circuitry 250 is instantiated by programmable circuitry executing weld detection instructions and/or configured to perform operations such as those represented by the flowcharts of FIG. 6 (e.g., block 606 and 634), FIGS. 7A-7B (e.g., blocks 702-736), and FIGS. 12A-12B (e.g., blocks 1206, 1208, 1250, and 1258).

In some examples, the controller circuitry 151 includes means for detecting an abnormal weld of a switch of the vehicle electrical system. For example, the means for detecting an abnormal weld may be implemented by weld detection circuitry 250. In some examples, the weld detection circuitry 250 may be instantiated by programmable circuitry such as the example programmable circuitry 1712 of FIG. 17. For instance, the weld detection circuitry 250 may be instantiated by the example microprocessor 1800 of FIG. 18 executing machine executable instructions such as those implemented by at least blocks 606 and 634 of FIG. 6, blocks 702-736 of FIGS. 7A-7B, and blocks 1206, 1208, 1250, and 1258 of FIGS. 12A-12B. In some examples, the weld detection circuitry 250 may be instantiated by hardware logic circuitry, which may be implemented by an ASIC, XPU, or the FPGA circuitry 1900 of FIG. 19 configured and/or structured to perform operations corresponding to the machine-readable instructions. Additionally or alternatively, the weld detection circuitry 250 may be instantiated by any other combination of hardware, software, and/or firmware. For example, the weld detection circuitry 250 may be implemented by at least one or more hardware circuits (e.g., processor circuitry, discrete and/or integrated analog and/or digital circuitry, an FPGA, an ASIC, an XPU, a comparator, an op-amp, a logic circuit, etc.) configured and/or structured to execute some or all of the machine-readable instructions and/or to perform some or all of the operations corresponding to the machine-readable instructions without executing software or firmware, but other structures are likewise appropriate.

As illustrated in FIG. 2, the charger circuitry 156 includes example DC charger circuitry 260. The DC charger circuitry 260 receives a signal from the diagnostic circuitry 220 that the energy source has DC charging available. In some examples, the signal from the diagnostic circuitry 220 is based on a determination that a duty cycle of the received signal is between approximately 3% to approximately 7%, the received signal is within range of the vehicle, and/or the welds of the switch of the vehicle are within the normal operational range. The DC charger circuitry 260 charges the battery and/or the energy storage device using DC voltage (e.g., DC fast charging). In some examples, the DC charger circuitry 260 is instantiated by programmable circuitry executing DC charger instructions and/or configured to perform operations such as those represented by the flowcharts of FIG. 5 (e.g., blocks 510, 516, and 520), FIG. 6 (e.g., blocks 628 and 636), and FIG. 12A (e.g., blocks 1214, 1220, 1222, and 1228).

In some examples, the charger circuitry 156 includes means for charging using DC voltage. For example, the means for charging using DC voltage may be implemented by DC charger circuitry 260. In some examples, the DC charger circuitry 260 may be instantiated by programmable circuitry such as the example programmable circuitry 1712 of FIG. 17. For instance, the DC charger circuitry 260 may be instantiated by the example microprocessor 1800 of FIG. 18 executing machine executable instructions such as those implemented by at least blocks 510, 516, and 520 of FIG. 5, blocks 628 and 636 of FIG. 6, and blocks 1214, 1220, 1222, and 1228 of FIG. 12A. In some examples, the DC charger circuitry 260 may be instantiated by hardware logic circuitry, which may be implemented by an ASIC, XPU, or the FPGA circuitry 1900 of FIG. 19 configured and/or structured to perform operations corresponding to the machine-readable instructions. Additionally or alternatively, the DC charger circuitry 260 may be instantiated by any other combination of hardware, software, and/or firmware. For example, the DC charger circuitry 260 may be implemented by at least one or more hardware circuits (e.g., processor circuitry, discrete and/or integrated analog and/or digital circuitry, an FPGA, an ASIC, an XPU, a comparator, an op-amp, a logic circuit, etc.) configured and/or structured to execute some or all of the machine-readable instructions and/or to perform some or all of the operations corresponding to the machine-readable instructions without executing software or firmware, but other structures are likewise appropriate.

The charger circuitry 156 further includes the AC charger circuitry 270. The AC charger circuitry 270 receives a signal from the diagnostic circuitry 220 that the energy source has AC charging available. In some examples, the signal from the diagnostic circuitry 220 is based on a determination that the duty cycle of the received signal is greater than approximately 8%, the received signal is within range of the vehicle, and/or the welds of the switch of the vehicle are within the normal operational range. The AC charger circuitry 270 charges the battery and/or the energy storage device using AC voltage. In some examples, the AC charger circuitry 270 inverts AC voltage to DC voltage to charge the battery using the DC voltage. In some examples, the AC charger circuitry 270 is instantiated by programmable circuitry executing AC charger instructions and/or configured to perform operations such as those represented by the flowcharts of FIG. 5 (e.g., blocks 514, 518, and 522) and FIGS. 12A-12B (e.g., blocks 1234, 1240, 1242, and 1252).

In some examples, the charger circuitry 156 includes means for charging using AC voltage. For example, the means for charging using AC voltage may be implemented by AC charger circuitry 270. In some examples, the AC charger circuitry 270 may be instantiated by programmable circuitry such as the example programmable circuitry 1712 of FIG. 17. For instance, the AC charger circuitry 270 may be instantiated by the example microprocessor 1800 of FIG. 18 executing machine executable instructions such as those implemented by at least blocks 514, 518, and 522 of FIG. 5 and blocks 1234, 1240, 1242, and 1252 of FIGS. 12A-12B. In some examples, the AC charger circuitry 270 may be instantiated by hardware logic circuitry, which may be implemented by an ASIC, XPU, or the FPGA circuitry 1900 of FIG. 19 configured and/or structured to perform operations corresponding to the machine-readable instructions. Additionally or alternatively, the AC charger circuitry 270 may be instantiated by any other combination of hardware, software, and/or firmware. For example, the AC charger circuitry 270 may be implemented by at least one or more hardware circuits (e.g., processor circuitry, discrete and/or integrated analog and/or digital circuitry, an FPGA, an ASIC, an XPU, a comparator, an op-amp, a logic circuit, etc.) configured and/or structured to execute some or all of the machine-readable instructions and/or to perform some or all of the operations corresponding to the machine-readable instructions without executing software or firmware, but other structures are likewise appropriate.

The controller circuitry 151 further includes example interface circuitry 280 connected to example user interface circuitry 290. The interface circuitry 280 receives signals from the charger circuitry 156 regarding the charging status of the battery and/or the energy storage device. In some examples, the interface circuitry 280 receives a signal from the connection determination circuitry 210 and/or the diagnostic circuitry 220 that charging is not available from the energy source. In some examples, the interface circuitry 280 sends a signal to the user interface circuitry 290 to display a notification to the user via a user interface (e.g., the user interface 155 of FIG. 1) regarding the charging status. In some examples, the interface circuitry 280 sends a signal to the user interface circuitry 290 to display a notification to the user regarding a health of the battery and/or other indications of battery usage. In some examples, the interface circuitry 280 and the user interface circuitry 290 are instantiated by programmable circuitry executing interface instructions and/or configured to perform operations such as those represented by the flowcharts of FIG. 5 (e.g., blocks 512, 524, and 526).

In some examples, the controller circuitry 151 includes means for displaying a notification to the user. For example, the means for displaying the notification may be implemented by interface circuitry 280 and user interface circuitry 290. In some examples, the interface circuitry 280 and the user interface circuitry 290 may be instantiated by programmable circuitry such as the example programmable circuitry 1712 of FIG. 17. For instance, the interface circuitry 280 and the user interface circuitry 290 may be instantiated by the example microprocessor 1800 of FIG. 18 executing machine executable instructions such as those implemented by at least blocks 512, 524, and 526 of FIG. 5. In some examples, the interface circuitry 280 and the user interface circuitry 290 may be instantiated by hardware logic circuitry, which may be implemented by an ASIC, XPU, or the FPGA circuitry 1900 of FIG. 19 configured and/or structured to perform operations corresponding to the machine-readable instructions. Additionally or alternatively, the interface circuitry 280 and the user interface circuitry 290 may be instantiated by any other combination of hardware, software, and/or firmware. For example, the interface circuitry 280 and the user interface circuitry 290 may be implemented by at least one or more hardware circuits (e.g., processor circuitry, discrete and/or integrated analog and/or digital circuitry, an FPGA, an ASIC, an XPU, a comparator, an op-amp, a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the controller circuitry 151 and the charger circuitry 156 of FIG. 1 is illustrated in FIG. 2, one or more of the elements, processes, and/or devices illustrated in FIG. 2 may be combined, divided, re-arranged, omitted, eliminated, and/or implemented in any other way. Further, the example connection determination circuitry 210, the example diagnostic circuitry 220, the example duty cycle measurement circuitry 230, the example range detection circuitry 240, the example weld detection circuitry 250, the example DC charger circuitry 260, the example AC charger circuitry 270, the example interface circuitry 280, the example user interface circuitry 290, and/or, more generally, the example controller circuitry 151 and the example charger circuitry 156 of FIG. 2, may be implemented by hardware alone or by hardware in combination with software and/or firmware. Thus, for example, any of the example connection determination circuitry 210, the example diagnostic circuitry 220, the example duty cycle measurement circuitry 230, the example range detection circuitry 240, the example weld detection circuitry 250, the example DC charger circuitry 260, the example AC charger circuitry 270, the example interface circuitry 280, the example user interface circuitry 290, and/or, more generally, the example controller circuitry 151 and the example charger circuitry 156, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example controller circuitry 151 and the example charger circuitry 156 of FIG. 2 may include one or more elements, processes, and/or devices in addition to, or instead of, those illustrated in FIG. 2, and/or may include more than one of any or all of the illustrated elements, processes and devices.

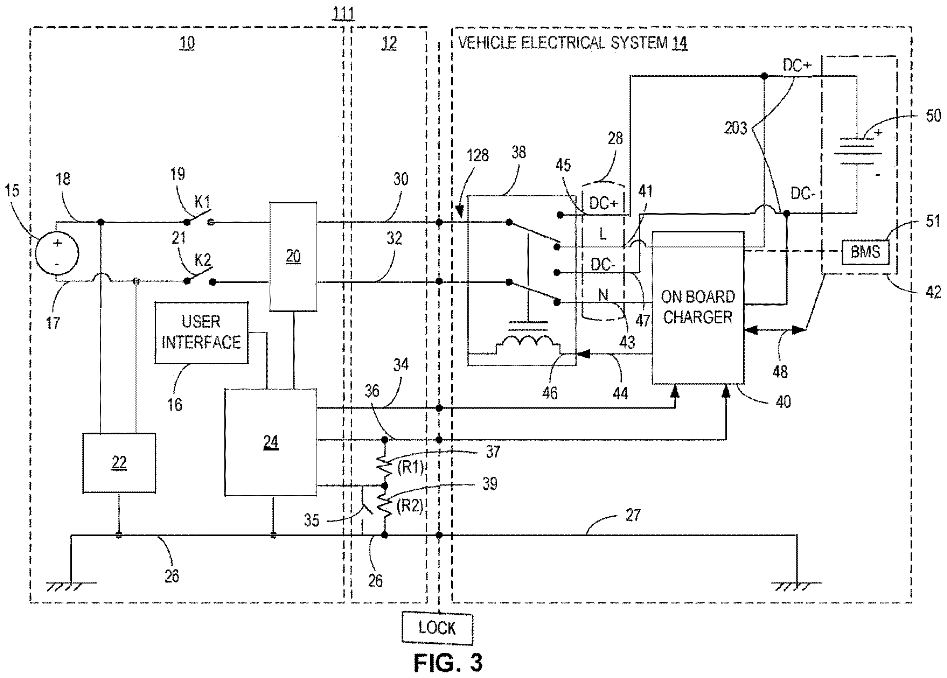

FIG. 3 is a first example block diagram of a charging system 111 that can be included in the vehicle 110 of FIG. 1. As illustrated in FIG. 3, the charging system 111 includes multiple components (e.g., sections, modules, etc.) such as: (a) a charging station section 10, (b) a connector section 12, and (c) a vehicle electrical system 14. In some examples, the connector 12 includes male and/or female electrical leads or pins coupled to a wire or cable. The connector 12 is used to connect the charging station 10 to the vehicle electrical system 14 to charge (or discharge) a battery 50 (e.g., the battery 162 of FIG. 1) located within the energy storage device 42, to manage the state of charge of the battery 50, and/or to charge the energy storage device 42 and/or an additional energy storage device on or otherwise coupled to the vehicle. In some examples, the connector 12 is connected to or forms connections within the charging station 153 of FIG. 1.

The charging station 10 of FIG. 3 includes an energy source 15, an isolation monitor 22, a sensor 20 (e.g., a voltage sensor, a current sensor, etc.), a first transmission line 18, a first station switch 19, a second transmission line 17, a second station switch 21, a charge controller 24, and a user interface 16 (e.g., touch screen electronic display, etc.).

The energy source 15 (e.g., a voltage source, a current source, etc.) is coupled to the first transmission line 18 and the second transmission line 17. The energy source 15 may include a grid voltage from a public or private power grid, such as an AC or DC voltage source. The first transmission line 18 and/or the second transmission line 17 may include a single insulated conductor, a set of stranded conductors with an insulating sheath, a cable, or any other means for transmitting voltage.

The first station switch 19 is connected to the first transmission line 18, which can interrupt or divide the first transmission line 18 into an energized portion (e.g., active) and a deenergized portion (e.g., inactive) if the first station switch 19 is in an open state. However, if the first station switch 19 is in a closed state, the first transmission line 18 is energized and can transmit (e.g., continuously transmit) electrical energy from the energy source 15 to the sensor 20 or the connector 12.

The second station switch 21 is connected to the second transmission line 17, which can interrupt or divide the second transmission line 17 into an energized portion (e.g., active) and deenergized portion (e.g., inactive) if the second station switch 21 is in an open state. However, if the second station switch 21 is in a closed state the second transmission line 17 is energized and can transmit (e.g., continuously transmit) electrical energy from the energy source to the sensor 20 or connector 12.

The isolation monitor 22 of the charging station 10 is coupled between the first transmission line 18 and the second transmission line 17. The isolation monitor 22 is configured to measure or monitor a leakage current between the first transmission line 18 and the second transmission line 17. The leakage current indicates that the charging station 10, the connector 12, and/or the vehicle electrical system 14 has unwanted current because of one or more of the following: (a) inadequate insulation between current flowing in the first transmission line 18 and the second transmission line 17, (b) an electromagnetic coupling path between AC current flowing in the first transmission line 18 and the second transmission line 17, (c) failure of one or more switching devices (e.g., transistors, diodes, relays) in a rectifier, inverter, or DC-to-DC converter of the charging station 10 or the vehicle electrical system 14, or (d) insulation of one or more windings of a generator/alternator is compromised in the energy source 15. If the leakage current exceeds a threshold, the end user or operator may be alerted via the user interface 16. In some examples, if the leakage current exceeds the threshold, the end user or operator may be alerted via the user interface 16 to disconnect the connector 12 from the vehicle electrical system 14 and to switch off the charging station 10. Further, in other examples, if the leakage current (which is detected by the isolation monitor 22) exceeds the threshold, the end user or operator may be alerted via the user interface 16 to disconnect the connector 12 from the vehicle electrical system 14 and the charging station 10 will automatically switch off. In some examples, the user interface 16 may include any of the following components: an electronic display, a touch-screen electronic display, a keypad, a keyboard, a pointing device (e.g., electronic mouse), and/or one or more station switches (e.g., 19, 21). In some examples, the user interface 16 includes a short-range wireless communication module in communication with an application on a wireless device of the user.

In FIG. 3, the sensor 20 is configured to sense a voltage level (e.g., DC voltage level or root-mean-squared (RMS) voltage level for AC) on the first transmission line 18, the second transmission line 17, or a relative difference between the voltage levels on the first transmission line 18 and the second transmission line 17.

In a first state, the sensor 20 may include a DC voltmeter that can be selectively coupled to measure DC voltage between the first transmission line 18 and the second transmission line 17. In a second state, the sensor 20 may include an AC voltmeter, such as a full-wave bridge rectifier (e.g., of four diodes) coupled between the first transmission line 18 and the second transmission line 17 that provides an average reading of the AC voltage level (e.g., an indicator of RMS voltage for sinusoidal AC signal).

The charging system 111 includes the vehicle electrical system 14 that can be connected to the charging station 10 by the connector 12. The vehicle electrical system 14 includes a BMS 51 that is configured to monitor and control the energy storage device 42 or the battery 50. The connector 12 has input terminals 30, 32 for receiving electrical energy as DC or AC voltage from a charging station 10 to charge the energy storage device 42 and/or the battery 50.

At a charging station 10, a sensor 20 is configured to detect: (a) DC or AC voltage on or at the input terminals 30, 32, or (b) a user-defined entry or user-defined selection of a DC or an AC voltage from the user interface 16 of the charging station 10. The user-defined selection can relate to a user-defined switch state of the switches 19, 21, or to user-selectable software switches of the user interface 16 of the charging station 10. Based on a user selection made via the user interface 16, the charging station 10 is configured to indicate to a vehicle operator to disconnect the vehicle electrical system 14 from the charging station 10 if the BMS 51 determines that the energy storage device 42 and/or the battery 50 is presently in a fully charged state (e.g., 100% charged) or is at or has reached a target charged state (e.g., 80% charged). Further, the user interface 16 may indicate to the vehicle operator to disconnect the vehicle electrical system 14 from the charging station 10 if the charging station 10 is operating in a no charging (permitted) mode, such as based on the thermal state of the energy storage device 42, as reported to the charging station 10 by the BMS 51.

At the charging station 10, a charge controller 24 is configured to generate the CP signal to transmit via a CP terminal 34 of the connector 12. The CP signal can include a first PWM signal associated with the first mode in response to detection of DC voltage on the input terminals 30, 32, or a user-selection of DC voltage. The input terminals 30, 32 can be referred to as switched terminals 128 of the vehicle charging switch 38. In other examples, the CP signal can include a second PWM signal associated with the second mode in response to detection of AC voltage on the input terminals 30, 32, or a user-selection of AC voltage.

At the charging station 10, a charge controller 24 is configured to generate a proximity pilot (PP) signal to transmit via a CP terminal 36 of the connector 12. The PP signal includes a logic level signal or digital data indicative of whether the charging station 10 is connected to the vehicle electrical system 14 via the connector 12.

The PP signal on the PP terminal 36 indicates that an electrical connection exists (e.g., an electrical connection exists to enable communication and/or charging) between the charging station 10 and the vehicle electrical system 14. On the CP terminal 34, the CP signal can be regarded as a control signal that is generated and present after connecting (e.g., inserting) a plug, or a connector 12, or a cable connected to one or more connectors 12 of the vehicle to the charging station 10. Meanwhile, on the PP terminal 36, the PP can be regarded as a control signal that is generated and present even prior to inserting or connecting a plug or connector 12 of the vehicle to the charging station 10, provided that the plug or connector 12 is sufficiently close or proximate to the charging station 10 to be detected reliably. The PP signal indicates that the plug or connector 12 for the vehicle is present at the charging station 10.

In some examples, the CP terminal 36 is coupled to ground 26 (e.g., Earth ground, chassis ground, etc.) via a switchable resistive voltage divider 35, 37, 39. The resistive voltage divider is illustrated as resistor 37 (R1) and resistor 39 (R2) in series with a common node connected to a switch 35 (e.g., a voltage level switch). In an alternative example, a resistive voltage divider 35, 37, 39 is positioned between the PP terminal 36 and the chassis ground 26 to provide a switch-selectable voltage input to the charge controller 24 at the charging station 10 based on the PWM signal. The ground 26 is connected via the connector 12 to ground 27 of the vehicle electrical system 14.

The switch 35 may be mechanically switched between: (a) an off state (e.g., first logic level, such as a higher logic level, at the PP terminal 36) if the connector 12 is only connected to the charging station 10 or to the vehicle electrical system 14 and (b) an on state (e.g., second logic level, such as a lower logic level, at the PP terminal 36) if the connector 12 is connected to both the charging station 10 and the vehicle electrical system 14. Further, in some examples, the voltage level switch 35 is mechanically engaged or disengaged to change its electrical state between an off state and an on state by connecting or disconnecting the connector 12 to the charging station 10 and/or the vehicle electrical system 14. In an alternate example, the switch 35 includes or is replaced by a diode in parallel with one of the resistors 39 to provide a half-wave rectifier in which the positive pulses of PWM or negative pulses of the PWM can be measured to identify the presence of the connector 12 or plug at the charging station 10, or to perform other functions based on the frequency of PWM or the magnitude of the PWM signal.

The vehicle electrical system 14 includes an on-board charger (OBC) 40 (e.g., charger circuitry 156 of FIG. 1, etc.) with a communications port (e.g., a PWM receiver or transceiver module, alone or together with an integrator) that is configured to establish communications between the charge controller 24, the vehicle electrical system 14, and a duty-cycle detection module (e.g., an integrator with a store-and-hold accumulator) to interpret the CP signal. The CP signal determines whether charging occurs via the first mode or the second mode. The first mode of the CP signal includes a first duty cycle range (e.g., approximately 3% to 7% duty cycle), and the second mode of the CP signal includes a second duty cycle range (e.g., approximately equal to or greater than 8% duty cycle), wherein the first duty cycle range is lower than the second duty cycle range.

In some examples, a no charging (permitted) mode exists in which neither AC, nor DC charging of the energy storage device 42 on the vehicle is permitted if the duty cycle is less than a minimum duty cycle (e.g., less than approximately 3%) or if the duty cycle is greater than a maximum duty cycle (e.g., greater than approximately 97%). Accordingly, the CP terminal 34 can reflect a charging disabled signal based on the above ranges or other assigned ranges of the duty cycle. In some examples, charging station 10 provides a duty-cycle range of PWM of the CP signal indicative of a disabled mode where no charging of the battery 50 or energy storage device 42 is permitted during the charging session, as communicated over vehicle data bus 48 between the BMS 51 and the OBC 40.

The BMS 51 is a control system that manages or regulates the charging and discharging of an energy storage device 42 or the battery 50. The BMS 51 may include sensors, circuitry and an electronic data processing system programmed with software instructions: (a) to monitor sensor data, such as cell voltage and/or cell current at battery cells within the battery 50, battery terminal voltage and/or battery terminal current for a set of battery cells, cell temperature, battery temperature for a set of battery cells, cell capacity, battery capacity for a set of cells, cell state of charge (SOC), battery state of charge (SOC) for set of cells, cell state of power (SOP), battery state of power (SOP), cell state of health (SOH), battery state of health (SOH), cell or battery charge-discharge cycle aging, cell or battery calendar aging, cell power consumption, battery power consumption for a set of cells, parameters for cell charging cycles or battery charging cycles for a set of cells, and balancing of voltages, currents, temperature, or other parameters among sets of cells that include the battery 50, and (b) to control cell voltage and/or cell current at battery cells within the battery 50, battery terminal voltage and/or battery terminal current for a set of battery cells, cell temperature, battery temperature for a set of battery cells, cell capacity, battery capacity for a set of cells, cell state of charge (SOC), battery state of charge (SOC) for set of cells, cell state of power (SOP), battery state of power (SOP), cell state of health (SOH), battery state of health (SOH), cell or battery charge-discharge cycle aging, cell or battery calendar aging, cell power consumption, battery power consumption for a set of cells, parameters for cell charging cycles or battery charging cycles for a set of cells, and balancing of voltages, currents, temperature, or other parameters among sets of cells that include the battery 50.

In some examples, the BMS 51 may control the energy storage device 42 or the battery 50 by determining: (1) whether the energy storage device 42 or battery 50 is eligible for or in an appropriate state for charging via the first mode, the second mode, or both based on the battery management system's evaluation of interpretation of the sensor data (e.g., such as SOC, SOP and SOH, among other possible sensor data); (2) whether the energy storage device 42 or the battery 50 is limited to charging in the first mode, the second mode, or both, even if the charging station 10 can provide voltage to charge in the first mode, the second mode, or both (e.g., based on such as SOC, SOP and SOH, among other possible sensor data during a charging session of a respective vehicle), (3) whether the charging station 10 is limited or restricted to a particular charging mode (e.g., limited to charging in the first mode, the second mode, etc.), or (4) whether the charging station 10 is prevented from charging the battery 50 or the energy storage device 42 of a vehicle that is currently connected to the charging station 10 (e.g., because of the present thermal state of the charging station 10, etc.). The energy storage device 42 may include one or more of the following: the battery 50, the BMS 51, the battery 50 with an integral BMS 51, an ultra-capacitor, a super capacitor, and a capacitor bank.

The vehicle electrical system 14 includes the at least one switch 38 (e.g., a double-pole, double-throw switch, relay, or contactor) that is responsive to the interpretation of the OBC 40 of the CP signal (e.g., CP terminal 34) to control a first state of the switch 38 to operate in the first mode. In the first mode, the received DC voltage is directed from the input terminals 30, 32 to the energy storage device 42 (e.g., the battery 50) via switched terminals 128 of the switch 38 in the first state. The received DC voltage is directed to the energy storage device 42 if and/or when the BMS 51 authorizes charging (e.g., DC fast charging) of the energy storage device 42 (e.g., the battery 50) based on the respective time-varying state of charge (SOC) of the energy storage device 42, state of power (SOP) of the energy storage device 42, or state of health (SOH) of the energy storage device 42, among other electrical and thermal parameters. In one example, the switch 38 includes a relay or contactor for changing states of the switched terminals 128 based on a control terminal that energizes a solenoid coil 46 of the relay or the contactor. In other examples, the received AC voltage is directed to the energy storage device 42 if and/or when the BMS 51 authorizes charging (e.g., AC charging) of the energy storage device 42 (e.g., the battery 50).

In some examples, the vehicle charging switch 38 may include any of the following components: one or more relays, one or more contactors, and/or one or more semiconductor switches. The vehicle charging switch 38 has two or more switched terminals 28 and a control terminal 44 associated with a control signal. For example, the switched terminals 28 may include AC terminals 41, 43 and DC terminals 45, 47. As illustrated in FIG. 3, the AC terminals 41, 43 are also labeled line (L) and neutral (N); the DC terminals 45, 47 are also labeled DC+ and DC-. The OBC 40 is configured to provide a control signal or drive signal to the control terminals 44 to control the switching state of the vehicle charging switch 38 based on the OBC's evaluation or interpretation of the CP signal on the CP terminal 34 and the PP signal on the PP terminal 36 that indicates whether the charging station 10 is available or ready to provide AC charging, DC charging, or both.

In the vehicle electrical system 14, a vehicle charging switch 38 can be coupled to the first transmission line 18 and the second transmission line 17 via the connector 12 or a cable that is associated with one or more connectors 12. In some examples, the vehicle charging switch 38 is coupled to contacts or terminals of the first switch 19 and the second switch 21 and the sensor 20 has an impedance or coupling configuration (e.g., coupling electrical circuit or a coupling electromagnetic circuit) such that most electrical energy is flowing from the energy source 15 to the vehicle electrical system 14 via the vehicle charging switch 38. The vehicle charging switch 38 has an electromechanical actuator, such as the solenoid 46 with a solenoid coil that can move a core to make or break an electrical connection between a first set of electrical terminals 28 of the vehicle charging switch 38. In other examples, the vehicle charging switch 38 may include any of the following: a contactor, a set of separate vehicle charging switches, semiconductor switches, solid-state vehicle charging switch devices, thyristors, silico-controlled rectifier, triacs (e.g., bi-directional thyristors), a double-pole, double-throw contactor, a set of double-pole single throw relays, a set of double-pole, single throw contactors, a first semiconductor switch for the second mode, a second semiconductor switch for the first mode, a solid state AC relay, and/or a solid state DC relay. In some examples, the switch 38 includes a relay or a contactor with auxiliary contacts that are indicative of the on state or off state of the respective relay or the respective contactor.

Generally, in the vehicle electrical system 14, the OBC 40 is configured to provide a control signal to the switch 38 to activate or deactivate the switch 38 based on a detected range of the observed duty cycle of the CP signal by the duty-cycle detection module (e.g., integrator). The vehicle charging switch 28 (e.g., a double-pole, double-throw switch, relay or contactor) of the vehicle electrical system 14 is responsive to the interpretation of the OBC 430 of the CP signal (e.g., at the CP terminal 34) to control a second state of the switch 38. In the second state, the switch 38 is to operate in the second mode in which received AC voltage is directed from the input terminals 30, 32 to the OBC 40 via the switched terminals of the switch 38. The switch 38 is to operate in the second state if and/or when the BMS 51 authorizes charging (e.g., AC charging) of the energy storage device 42 (e.g., battery 50) based on the respective time-varying charge state of the energy storage device 42. The OBC 40 may include: (a) an evaluator or integrator to estimate a duty cycle of the pulse-width modulation of the CP signal and (b) a logic clip, logic comparator or logic monitor to estimate whether the logic level (e.g., of a pulse train or series of pulses) meets or exceeds a threshold indicative of one or more logic level states.

In some examples, the OBC 40 includes a rectifier or an inverter that is configured to convert the received alternating current to a direct current (DC) for application to the energy storage device 42 (e.g., battery 50) at the DC terminals 203 if and/or when the vehicle charging switch 38 is in the second state. In some examples, the inverter is capable of converting (e.g., rectifying) AC voltage on the first transmission line 18 and the second transmission line 17 to DC voltage. For example, the rectifier may include a full-wave bridge rectifier, or a transformer that is coupled to a full-wave bridge rectifier of four diodes. Alternately, the on-board charger 40 may include an inverter with a half-bridge switching circuit that includes a low-side switch that is coupled to a high-side switch between a DC voltage bus, where the switched terminals of the low-side switch and the high-side switch are connected at the AC terminal.

The charging system 111 is configured to be compatible with different charging standards, such as NACS, the CCS, or both. The NACS uses common conductor pins for both alternating current (AC) and direct current (DC) charging. For example, a first conductor pin 45 can handle both positive direct current (DC+) and the Line 1 (L1) alternating current charging, whereas a second conductor pin 47 can handle both negative direct current (DC-) and Line 2 (L2) (also sometimes referred to as Neutral (N)) alternating current charging. In contrast to NACS, CCS has separate conductor pins for AC and DC charging (e.g., CCS conforms to J1772 5-pin standard for single phase AC charging from 120 Volts to 240 Volts (i.e., up to approximately 80 Amps)). A CCS1 combined charging system adds two pins for fast DC charging (e.g., up to approximately 350 kilowatts of charging power). For example, the AC charging pins may be labeled Line 1 and Line 2 (or Neutral), and the DC charging pins may include positive DC and negative DC pins. Accordingly, for CCS charging, the input terminals of the vehicle electrical system 14 include common terminals for both AC and DC voltage that are applied separately or sequentially to charge the energy storage device 42 or the battery 50 on the vehicle.

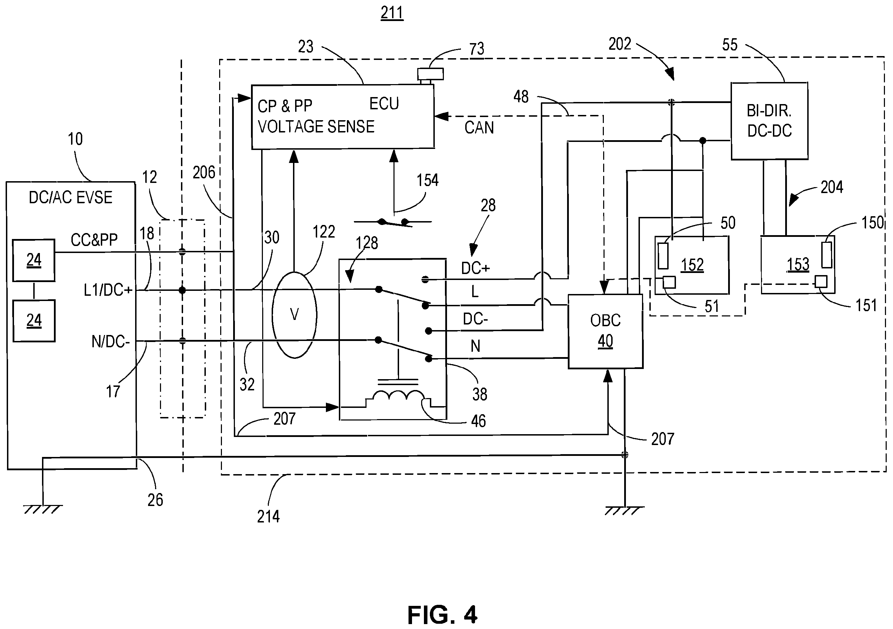

FIG. 4 is a block diagram illustrating another example charging system 211, which includes the charging station 10 that is connected or coupled to an example vehicle electrical system 214 via the connector 12. The charging system 211 of FIG. 4 is similar to the charging system 111 of FIG. 3, and the charging system 211 of FIG. 4 further includes the following components: an example electronic control unit 23 (ECU) (e.g., the controller circuitry 151, the charger circuitry 156, etc.), an example vehicular voltage sensor 122, an example (bi-directional) DC-DC converter 55, an example primary DC bus 202, and an example secondary DC bus 204. Further, in some examples, the charging system 211 includes an optional example auxiliary power supply 73, such as a battery, to provide independent, separate or redundant power to the ECU 23 to allow the ECU 23 to charge or recover one or more batteries 50, 150 that are discharged, based on the last observed, last available, and/or last recorded (e.g., in the ECU 23) state-of-charge, observed state-of-power, or observed state-of-health.

In the charging system 211 of FIG. 4, the OBC 40 has DC lines 202, 204 (e.g., DC buses) that are connected to or coupled to a first battery 50 (or a first energy storage device 152) and a second battery 150 (or a second energy storage device 153). The first energy storage device 152 and/or the second energy storage device 153 can be a battery, a capacitor, an ultracapacitor, and/or a super capacitor. The first battery 50 or the first energy storage device 152 is coupled to the first DC bus 202 at a respective first voltage level. The second battery 150 or the first energy storage device 153 is coupled to the second DC bus 204 at a respective second voltage level.

The DC-to-DC converter 55 (e.g., a bi-directional DC-to-DC converter) provides an interface between the first DC bus 202 and a second DC bus 204, wherein the first voltage level of the first DC bus 202 is different (e.g., lower) than the second voltage level of the second DC bus 204. In one example, the DC-to-DC converter 55 has an input DC level at the input terminals that is scaled to an output DC level, which is greater than or less than the input DC level, such that the output DC level matches the voltage level (range) of the energy storage device (e.g., the first energy storage device 152, the second energy storage device 153, etc.) that is coupled between the switched terminals 28 and the energy storage device 152, 153 for the first mode (e.g., DC charging). The DC-to-DC converter 55 may also match the output DC level of the OBC 40 to the energy storage device 152, 153 in the second mode (e.g., AC charging).

The first battery 50 has a first BMS 51 that is configured to monitor and control the first battery 50, and the second battery 150 has a second BMS 151 that is configured to monitor and control the second battery 150.

As shown in FIG. 4, the ECU 23 includes an electronic data processing system similar to the OBC 40 of FIG. 3. The ECU 23, OBC 40, and the BMS 51, 151 include an electronic data processing system, data bus, a data storage device, and one or more data ports. The electronic data processing system, the data storage device, and the one or more data ports are coupled to the data bus to support data communications between the electronic data processing system, the data storage device, and the one or more data ports. Further, the electronic data processing system is configured to execute software or software instructions that are stored within the data storage device. The ECU 23, or OBC 40, or both, may include software instructions for one or more of the following: a sensing module (e.g., voltage sensing module of transmission lines), an integrator or detector for detecting the duty cycle of the PWM of the CP signal, a clip comparator or a logic comparator for detecting the logic level of (e.g., of the PWM pulse train) the CP signal, a control or a status signal sensing module, and a vehicle data bus communications module. The BMS 51, 151 may include software instructions for monitoring the sensor data of the battery and cells, and controlling the battery based on evaluation or interpretation the sensor data. In some examples, a communication group of the ECU 23, OBC 40, and the BMS 51, 151 are configured to communicate with each other via a vehicle data bus 48 (e.g., CAN data bus).

The charging station 10 or the charge controller 24 of the charging station 10 generates and sends the CP signal (e.g., via one or more transmission lines 206) and the PP signal (e.g., via one or more transmission lines 206) to the ECU 23. In some examples, the CP signal and the PP signal are sent on separate transmission lines 206. However, in other examples, the charging station 10 may combine or multiplex the CP signal and the PP signal onto a common transmission line 206.

A vehicular voltage sensor 122 is configured to sense or detect an observed voltage (AC or DC) on the first transmission line 18 and the second transmission line 17 that are coupled to input terminals 30, 32 of the vehicle charging switch 38. The vehicular voltage sensor 122 is configured to provide the sensed, observed voltage to the ECU 23. Meanwhile, the charging station 10 is configured to provide the CP signal and the PP signal to the ECU 23 via one or more transmission lines 206, to the OBC 40 via transmission lines 206, 207, or both.

In the vehicle electrical system 114, the ECU 23 has a communications port that is configured to establish communications between the charge controllers 24, the vehicle electrical system 114, and a duty-cycle detection module (e.g., integrator) to interpret the CP signal with PWM. The vehicle electrical system 114 includes a switch 38 that is responsive to the interpretation of the ECU of the CP signal (e.g., duty cycle of PWM of the CP signal). In a first state, the switch 38 operates in the first mode in which the received DC voltage is directed from the input terminals to the energy storage devices 152, 153 via switched terminals 28, 128 of the switch 38. The switch 38 is in the first state if and/or when the BMS 51, 151 authorizes charging of the energy storage devices 152, 153 based on the respective time-varying charge state of the energy storage devices 152, 153.

In the vehicle electrical system 114, the switch 38 is responsive to the interpretation of the CP signal by the ECU 23. The interpretation of the CP signal controls a second state of the switch 38 to operate in the second mode. In the second mode, a received AC voltage is directed from the input terminals to the OBC 40 via the switched terminals 28, 128 of the switch 38 in the second state. The received AC voltage is directed from the input terminals to the OBC 40 if the BMS 51, 151 authorizes charging of the energy storage devices 152, 153 based on the respective time-varying charge state of the energy storage devices 152, 153.

The BMS 51, 151 can temper or control the charging modes, such as the first mode, the second mode, or the disabled charging mode (e.g., charging not permitted). In some examples, the OBC 40 and the ECU 23 are configured to limit charging to the second mode (e.g., an AC charging mode) for a charging session of the battery 50, 150 of the energy storage device 152, 153 of a vehicle consistent with the received duty cycle of the PWM of the CP signal and the voltage level of the CP signal provided by the charging station 10, subject to the authorization of the BMS 51, 151. In another example, the ECU 23 is configured to limit charging to the first mode (e.g., a DC charging mode) for a charging session of the battery 50, 150 of the energy storage device 152 of a vehicle consistent with the received duty cycle of the PWM of the CP signal and the voltage level of the CP signal provided by the charging station 10, subject to the authorization of the BMS 51, 151.

The ECU 23, OBC 40, and BMS 51, 151 may communicate among and between each other via the vehicle data bus 48. Subject to a first input (e.g., first enable logic signal from the OBC 40 based on its availability, authorization, and thermal state) and a second input (e.g., second enable logic signal based on authorization, thermal state, battery state, or charging request of the BMS 51, 151), where the both the first input (e.g., first enable logic signal) and the second input (e.g., second enable logic signal) are both required (e.g., as inputs to an AND gate that is inputted to the ECU 23 to enable the ECU 23 for normal operation), the ECU 23 may generate or transmit a control signal, via the vehicle data bus 48 (e.g., CAN data bus) to activate the OBC 40 (e.g., for an AC charging mode). The control signal may be generated by the ECU 23 based on one or more of the following: the sensed switching state of the vehicle charging switch 38 (e.g., relay), the observed voltage at the input terminals 30, 32, and evaluation (e.g., of the duty cycle of and/or logic level of) of the CP signal and the PP signal.

The OBC 40, the BMS 51, 151, or the battery 50, 150 may determine whether each respective thermal state of the OBC 40, the BMS 51, 151, the battery 50, 150, and the vehicle charging switch 38 are within the normal operating temperature range (which is associated with a respective enable logic signal) or outside of the normal operating range (which is associated with a respective disable logic signal). For example, the welded state of any vehicle charging switch 38 is indicative of the vehicle charging switch 38 having been outside of the normal operating temperature range (e.g., exceeds a threshold temperature) that permanently compromises the ability of the vehicle charging switch 38 to change switching states. Similarly, if one or switching devices in the OBC 40 exceed their normal operating temperature ranges (e.g., exceeds a threshold temperature), as indicated by sensor measurements, by thermal sensors in or on the OBC 40, or a thermal model that are processed by the ECU 23, the OBC 40 is determined to be outside of the normal operating range. Similarly, if cells within the battery 50, 150 exceed their operating temperature ranges, as indicated by sensor measurements, by thermal sensors in or on the battery 50, 150, or associated with the BMS 51, 151, or a thermal model that is processed by the ECU 23, the battery 50, 150 and/or the BMS 51, 151 is determined to be outside of its normal operating range. Any thermal sensors (e.g., thermistors mounted on or in the OBC 40, the BMS 51, 151, or the battery 50, 150) may be connected to the vehicle data bus 48 for communication to the ECU 23 or may be coupled by a transmission line, a cable, wires, twisted pairs, or conductors to the ECU 23, or to the data ports of the ECU 23 for communication of one or more thermal states to the ECU 23.

The charging system 211 may operate in accordance with various techniques, which may be applied separately or cumulatively.

Under a first technique, the OBC 40 or the ECU 23, or both, are configured to limit charging to the first mode. The first mode includes a DC charging mode to charge the battery 50, 150 or the energy storage device 152, 153 of a vehicle. The first mode charges the battery 50, 150 or the energy storage device 152, 153 consistent with the received duty cycle of the PWM of the CP signal and the voltage level of the CP signal provided by the charging station 10, subject to the authorization of the BMS 51, 151.

Under a second technique, the OBC 40, the ECU 23, or both, are configured to limit charging to the second mode. The second mode includes an AC charging mode to charge the battery 50, 150 or the energy storage device 152, 153 of a vehicle. The second mode charges the battery 50, 150 or the energy storge device 152, 153 consistent with the received duty cycle of the PWM of the CP signal and the voltage level of the CP signal provided by the charging station 10, subject to the authorization of the BMS 51, 151.

Under a third technique, the charging station 10 and the vehicle electrical system 114 are configured to charge the energy storage device 152, 153 or the battery 50, 150 of the vehicle with dual-mode charging. The dual mode charging charges with a preliminary DC charging mode followed by a finishing AC charging mode in a single charging session. The transition between DC charging mode and AC charging mode is based on the thermal state (e.g., thermal load) of the charging station 10, the battery 50, 150, the BMS 51, 151, or the switch 38. The thermal state is determined by whether a temperature threshold is exceeded to trigger a transition from the preliminary DC charging mode to the finishing AC charging mode. The thermal state is measured such that each component has a respective component temperature threshold that is unique to the charging station 10, the battery 50,150, the BMS 51, 151, or the switch 38.

Under a fourth technique, the charging station 10 is configured to change the CP signal, the transmitted duty cycle, or the transmitted voltage level to adjust or establish a combination of a preliminary AC charging mode followed by a finishing DC charging mode. In this example, the charging station 10 may respond to requests from the BMS 51, 151 or temperature sensing system/thermal management system based on the thermal state (e.g., thermal load) of the charging station 10, the battery 50, 150, the BMS 51, 151, and the switch 38. In some examples, the charging station responds to requests based on the thermal state falling under respective temperature thresholds to trigger a transition from the preliminary AC charging mode to the finishing DC charging mode. The thermal state is measured such that each component has a respective component temperature threshold that is unique to the charging station 10, the battery 50, 150, the BMS 51, 151, or the switch 38.

The ECU 23 is coupled to an auxiliary contact 154 or auxiliary switch of the vehicle charging switch 38, where a state of the auxiliary contact 154 is indicative of or representative of the switching state (e.g., off state or on state) of the vehicle charging switch 38. The auxiliary contact 154 or auxiliary switch is electrically isolated (e.g., by physical separation or electro-optical isolation) from the main contacts or main switched terminals of the vehicle charging switch 38.

The ECU 23 is energized or powered by the auxiliary power supply 73, such as a battery or energy storage device that can be separate and independent from the battery 50, 150, or the energy storage device 152, 153. Accordingly, the ECU 23 can rest in a stand-by mode or sleep mode, until the connector 12 is connected between the charging station 10 and the vehicle electrical system 114. From the stand-by or sleep mode, the ECU 23 can enter into a wake mode or an operational mode in which the ECU 23 is configured to control the vehicle electrical system 14 to charge or discharge the battery 50, 150 or the energy storage device 152, 153. The auxiliary power supply 73 is configured to allow the ECU 23 to operate even if the battery 50, 150 has a SOC, SOP, or SOH that is: (a) indicative of a depleted state or (b) below or near a threshold level (e.g., minimum SOC, minimum SOP, and/or minimum SOH). The auxiliary power supply 73 is configured to power the ECU 23 from a sleep mode or inactive mode to the wake mode to recover or manage charging of the battery 50, 150 that is depleted with a SOC, SOP, or SOH that falls below a minimum threshold.

Flowcharts representative of example machine-readable instructions, which may be executed by programmable circuitry to implement and/or instantiate the controller circuitry 151 and the charger circuitry 156 of FIG. 2 and/or representative of example operations which may be performed by programmable circuitry to implement and/or instantiate the controller circuitry 151 and the charger circuitry 156 of FIG. 2, are shown in FIGS. 5-7B and 12A-12B. The machine-readable instructions may be one or more executable programs or portion(s) of one or more executable programs for execution by programmable circuitry such as the programmable circuitry 1712 shown in the example processor platform 1700 discussed below in connection with FIG. 17 and/or may be one or more function(s) or portion(s) of functions to be performed by the example programmable circuitry (e.g., an FPGA) discussed below in connection with FIGS. 18 and/or 19. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 5-7B and 12A-12B, many other methods of implementing the example controller circuitry 151 and the example charger circuitry 156 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 5-7B and 12A-12B may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

FIG. 5 is a flowchart of an example process 500 for controlling the vehicle electrical system 214, where the charging station 10 is connected or coupled to a vehicle electrical system 214 in accordance with FIG. 4. The charging station 10 may also be referred to as electrical vehicle supply equipment (EVSE). Vehicle control unit (VCU) or vehicle controller is within the vehicle electrical system 14. Within the vehicle electrical system 14, the vehicle controller (e.g., VCU) or on-board charger 40 (OBC 40) or electronic control unit 23 (ECU 23) may interpret the CP signal, the PP signal or both, if the EVSE or charging station 10 generates and transmits the CP signal, the PP signal, or both, to the vehicle electrical system 14.

The example machine-readable instructions and/or the example operations 500 of FIG. 5 begin at block 502 at which the connection determination circuitry 210 determines that the EVSE is connected to the charging port or charging input port of the vehicle electrical system 14.

At block 504, the connection determination circuitry 210 configures the EVSE to establish an electrical connection for communication of the CP signal, the PP signal, and ground 26, in accordance with the charging system 111 of FIG. 3, the charging system 211 of FIG. 4, or another example charging system. For example, the charging system 111 of FIG. 3 supports the connector 12 with the CP terminal 34 for the CP signal, the PP terminal 36 for the PP signal, and the ground 26. Similarly, the charging system 211 of FIG. 4 supports a connector 12 with one or more conductors, wires, cables or transmission lines 206, 207, for the CP signal, the PP signal, or both.

At block 506, the connection determination circuitry 210 configures the EVSE to communicate the power supply availability of the charging station 10 through the transmission of the CP signal to the OBC 40. The CP signal may include one or more of the following: (a) a logic level signal (e.g., one or more target voltage levels of a PWM signal), (b) a PWM signal, and/or (c) an optional encoded data component (e.g., duty-cycle data component, or thermal state enable/disable data). In some examples, the EVSE communicates supply availability and/or connection via the transmission of the PP signal.

At block 508, the diagnostic circuitry 220 (e.g. the ECU 23 or on-board charger 40) determines the duty cycle percentage of the PWM of the CP signal. If the diagnostic circuitry 220 determines that the duty cycle of the PWM of the CP signal is equal to or greater than approximately 3% and less than or equal to approximately 7%, then the method continues with block 510 (e.g., in DC charging mode). If diagnostic circuitry 220 determines that the duty cycle is less than approximately 3%, then the method continues with block 512 (e.g., in disabled charging mode). If diagnostic circuitry 220 determines that the duty cycle is equal to or is greater than approximately 8% and less than or equal to approximately 97%, then the method continues with block 514 (e.g., in AC charging mode).

If and/or when the diagnostic circuitry 220 determines that the duty cycle of the PWM of the CP signal is less than approximately 3% (block 508), the method 500 continues at block 512 (e.g., in the disabled charging mode), where the interface circuitry 280 sends a charger disable signal or message to one or more of the following electronic modules: the vehicle control unit (VCU), the ECU 23, the BMS 51, 151, or the OBC 40. The charger disable signal informs the above electronic modules about the unavailability of the power supply of the charging station 10.

At block 526, the interface circuitry 280 generates a data message regarding the unavailability of the power supply and sends (e.g., via the vehicle data bus 48) the message to the user interface 16. The user interface circuitry 290 configures the user interface 16 to display the data message. In this example, the process 500 ends.

If and/or when the diagnostic circuitry 220 determines that the duty cycle of the PWM of the CP signal is equal to or greater than approximately 3% and less than or equal to approximately 7% (block 508), the method 500 continues at block 510 (e.g., in DC charging mode), where the DC charger circuitry 260 configures the OBC 40 and the BMS 51, 151 to support DC charging mode. The OBC 40, the ECU 23, or both send (e.g., via vehicle data bus 48) a DC availability signal to the BMS 51, 151 of the vehicle electrical system 214. For example, the OBC 40 is configured to support the DC charging mode and to send the DC availability signal to the BMS 51, 151.

At block 516, which follows block 510 (in the DC charging mode), the DC charger circuitry 260 configures the BMS 51, 151 to send (e.g., via the vehicle data bus 48) a charge requirement (e.g., estimated charging duration, target charging current or target charging current versus charging time, target charging voltage or target charging voltage versus charging time, target state of charge (SOC) for the battery 50 or its cells, target state of power (SOP) for the battery or its cells, or target state of health (SOH) for the battery 50 or its cells) to the OBC 40. The OBC 40 sends a control signal (e.g., to a solenoid terminal 46, gate or base or control input of the switch) to drive the vehicle charging switch 38 for DC charging mode (e.g., a switching state consistent with the DC charging mode) or fast DC charging mode. For example, the OBC 40 may engage in DC charging mode or the "fast DC charging mode" if authorized by the BMS 51, 151.

At block 520, after the energy storage device 152, 153 of the vehicle electrical system 214 is charged (e.g., fully charged), the DC charger circuitry 260 configures the BMS 51, 151 to send (e.g., via the vehicle data bus 48) a code to the OBC 40 to turn off or disable DC charging.

At block 524, the interface circuitry 280 configures the DC charger circuitry 260 to send to the user interface 16 (e.g., human machine interface, HMI) a charging completion status.

In this example, the process 500 continues at block 526, where the interface circuitry 280 generates a charge completion status message and sends (e.g., via the vehicle data bus 48) the message to the vehicle control unit, the ECU 23, the OBC 40, and/or the user interface 16. The user interface circuitry 290 configures the user interface 16 to display the charge completion status.

If and/or when the diagnostic circuitry 220 determines that the duty cycle of the PWM of the CP signal determines that the duty cycle is equal to or is greater than approximately 8% and is equal to or is less than approximately 97% (block 508), the method 500 continues at block 514 (e.g., in AC charging mode), where the AC charger circuitry 270 configures the OBC 40, the ECU 23, and the BMS 51, 151 to support the AC charging mode and send (e.g., via a vehicle data bus 48) an AC availability signal to the BMS 51, 151 of the vehicle electrical system 214. For example, the OBC 40 is configured to support the AC charging mode and to send the AC availability signal or message to the BMS 51, 151 of the vehicle electrical system 214.

At block 518, the AC charger circuitry 270 configures the BMS 51, 151 to send a charge requirement to the OBC 40. In response to the charge requirement, the OBC 40 or the ECU 23 is configured to operate in the AC charging mode. For example, subject to the authorization of the BMS 51, 151, the ECU 23 or the OBC 40 may determine the maximum current for the AC charging mode based on one or more respective ranges of the PWM duty cycle of the received CP signal from the charging station 10. Further, the BMS 51, 151 may restrict or limit the maximum current for the AC charging mode to conform to one or more SOC, SOP, SOH targets of the battery 50, 150 or the energy storage device 152, 153.

At block 522, after the energy storage device 152, 153 of the vehicle electrical system 214 is charged (e.g., fully charged), the AC charger circuitry 270 configures the BMS 51, 151 to send (e.g., via the vehicle data bus 48) a code to the OBC 40 to turn off or disable AC charging.

At block 524, the interface circuitry 280 configures the the AC charger circuitry 270 to send to the user interface 16 (e.g., human machine interface, HMI) a charging completion status.

In this example, the process 500 continues at block 526, where the interface circuitry 280 generates a charge completion status message and sends (e.g., via the vehicle data bus 48) the message to the vehicle control unit, the ECU 23, the OBC 40, and/or the user interface 16. The user interface circuitry 290 configures the user interface 16 to display the charge completion status.

FIG. 6 is a flowchart of an example process 508 for controlling a vehicle electrical system 214, where the charging station 10 is connected or coupled to the vehicle electrical system 214 in accordance with FIG. 4. FIG. 6 is an example method for determining the duty cycle of the CP signal. The example machine-readable instructions and/or the example operations 508 of FIG. 6 begin at block 602 at which the range detection circuitry 240 determines that the PP signal is in range to the vehicle.

At block 602 and 604, the range detection circuitry 240 configures the OBC 40 to determine whether the PP signal at the transmission lines 206, 207 is within a pre-defined range. The PP signal indicates whether the cable and the one or more connectors 12 are: (a) next to, near to, or (b) confirmed to be connected between the charging station 10 and the vehicle electrical system 14, where accompanied by the CP signal indicating affirmative cable/connector connection, such that charging of the energy storage device 152, 153 (e.g., battery 50, 150) on the vehicle is possible. If the range detection circuitry 240 determines that the PP signal is within the pre-defined range (block 604: YES), then the method continues with block 606. However, if the range detection circuitry 240 determines that the PP signal is determined to be outside of the pre-defined range (block 604: NO), then the method progresses directly via block 608, or indirectly via block 618, to the end of the method.

At block 606, the diagnostic circuitry 220, via the weld detection circuitry 250, applies a diagnostic procedure (e.g., diagnostic test for weld detection of contacts) to the vehicle charging switch 38 (e.g., double-pole, double-throw (DPDT) vehicle charging switch 38) to determine whether the diagnostic status or the operation state of the vehicle charging switch 38 is sufficient for charging. The vehicle charging switch 38 can be enabled by the OBC 40 or the ECU 23 (e.g., via solenoid 46) if the weld detection circuitry 250 determines that the thermal state of the vehicle charging switch 38 is or was within normal operating range and has not welded or fused the contacts of the vehicle charging switch 38. For example, the weld detection circuitry 250 may test for weld detection of one or more contacts of the vehicle charging switch 38, which is where the contacts are fused by heat for an abnormally closed state that persists even if the solenoid 46 or actuator of the vehicle charging switch 38 is activated in an attempt to switch between a closed state and an open state of the vehicle charging switch 38. If the switch 38 includes a relay or a contactor, the diagnostic procedure is configured to evaluate whether or not the contacts of the relay or the contactor are welded or fused, based on any of the following: (a) response or lack of response to a control signal applied to the solenoid 46 of the relay or contactor, (b) observed voltage at the output of the switched terminals (28, 128) of the relay, and/or (c) normal changes in state to auxiliary contacts in response to a control signal applied to the solenoid 46 of the relay or contactor. If the diagnostic circuitry 220 determines that the vehicle charging switch 38 passes the diagnostic procedure (e.g., weld contact test) (block 610: YES), then the method continues with block 612. However, if the diagnostic circuitry 220 determines that the vehicle charging switch 38 fails or does not pass the diagnostic procedure (block 610: NO), then the method progresses via block 608 to the end of the method.

At block 612, the duty cycle measurement circuitry 230 determines a parameter level (e.g., voltage level) of the CP signal is at or near a first target parameter value (e.g., 9 VDC). At block 614, the duty cycle measurement circuitry 230 further determines whether the CP signal has a duty cycle within a pre-determined range (e.g., equal to or greater than approximately 3% duty cycle and equal to or less than approximately 7% duty cycle) for DC charging. If the duty cycle measurement circuitry 230 determines that the parameter level (e.g., magnitude) of the CP signal is about or approximately at the first target parameter level and that the observed duty cycle of the CP signal is within the pre-determined range (block 614: YES), the method continues at block 616, and the vehicle charging switch 38 is operated or controlled by the ECU 23 or the OBC 40. However, if the duty cycle measurement circuitry 230 determines that the parameter level of the CP signal is not within a tolerance of the first target parameter level and that the CP signal is not within the pre-determined range (block 614: NO), the method continues at block 618, and the vehicle charging switch 38 (e.g., double-pole, double-throw relay) is not operated or controlled by the ECU 23 or the OBC 40, and the method ends.

At block 620, the duty cycle measurement circuitry 230 determines a parameter level (e.g., voltage level) of the CP signal is at or near a second target parameter value (e.g., 6 VDC). At block 622, the duty cycle measurement circuitry 230 determines whether the CP signal has a duty cycle within a pre-determined range (e.g., equal to or greater than approximately 3% duty cycle and equal to or less than approximately 7% duty cycle) for DC charging. If the duty cycle measurement circuitry 230 determines that the parameter level (e.g., magnitude) of the CP signal is about or approximately at the second target parameter level and that the CP signal is within the pre-determined range (block 622: YES), the method continues at block 624 and the vehicle charging switch 38 is operated or controlled by the ECU 23 or the OBC 40 (e.g., to keep the vehicle charging switch 38 or dual-pole, dual throw relay in a suitable state (or on-state) for DC charging). However, if the duty cycle measurement circuitry 230 determines that the parameter level of the CP signal is not within a tolerance of the second target parameter level and that the CP signal not within the pre-determined range (block 622: NO), the method continues to block 626 and the vehicle charging switch 38 (e.g., DPDT relay) is not operated and kept in an off state. The method ends after block 626.

At block 628, the duty cycle measurement circuitry 230 causes the DC charger circuitry 260 to start DC charging of the energy storage device 152, 153 on the vehicle (or maintain for one or more successive sampling intervals).

At block 630, the range detection circuitry 240 regularly samples or checks the CP signal and the PP signal to determine that the duty cycle range of the CP signal is still within a suitable target range for DC charging and the connection between the connector 12 and the vehicle electrical system 214 is sufficient, as opposed to AC charging or not permitting any charging. If the range detection circuitry 240 determines that the parameter level (e.g., magnitude) of the CP signal is about or approximately at the second target parameter level and that the CP signal is within the pre-determined range for the duty cycle percentage for DC charging (block 632: YES), the method continues at block 636 and the vehicle charging switch 38 is operated or controlled by the ECU 23 or the OBC 40 (e.g., to keep the vehicle charging switch 38 in a suitable state (or on-state) for DC charging). However, if the range detection circuitry 240 determines that the parameter level (e.g., magnitude) of the CP signal is about or approximately at the second target parameter level and that the CP signal is within the determined range of PWM for the duty cycle percentage for DC charging (block 632: NO), the method continues at block 634.

In block 634, the weld detection circuitry 2350 runs a diagnostic test for weld detection of the contacts of the vehicle charging switch 38, which is similar to the test of block 606. The method ends after block 634.

FIG. 7A is a flowchart of an example process 606 for controlling the vehicle electrical system 214, where the charging station 10 is connected or coupled to the vehicle electrical system 214 in accordance with FIG. 4. FIG. 7A is an example method for performing a weld detection diagnostic test. The example machine-readable instructions and/or the example operations 606 of FIG. 7A begin at block 702.

At block 702, the weld detection circuitry 250 detects whether the auxiliary contact 154 of the vehicle charging switch 38 is in an on state or off state. The state of the vehicle charging switch 38 is dependent upon whether the auxiliary contact 154 is normally closed or normally open.

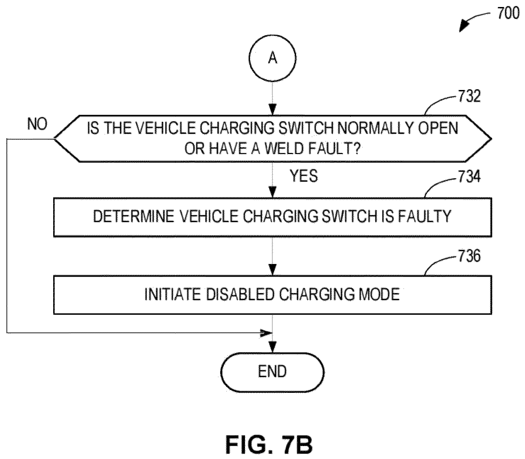

At block 704, the weld detection circuitry 250 reads a parameter in the data storage device or in a register that indicates whether the vehicle charging switch 38 has a normally closed or normally open auxiliary contact 154. If the vehicle charging switch 38 has a normally closed auxiliary contact 154 (block 704: YES), the method continues at block 708. However, if the vehicle charging switch 38 has a normally open auxiliary contact 154 (block 704: NO), the method continues with block 706 and proceeds to FIG. 7B.

At block 706, the weld detection circuitry 250 reads the parameter in the data storage device or in the register of the electronic data processor of the ECU 23 that indicates that the vehicle charging switch 38 has a normally open auxiliary contact 154.

After block 706, and as later disclosed in connection to FIG. 7B, if the weld detection circuitry 250 determines: (a) a weld fault is present in switch 38 because the auxiliary contact 154 is normally open and does not change state in response to energizing of the solenoid 46; (b) a weld fault is detected based on a normally closed auxiliary contact 154 because DC voltage is sensed at the auxiliary contact 154; (c) a weld fault is detected in switch 38 because DC voltage is available at input pole (e.g., switched terminals 28, 128) of the switch 38; and/or (d) a weld fault is detected in the switch 38 stemming from the auxiliary contact 154. Further, block 706 may be followed by the diagnostic procedure of FIG. 7B if certain conditions are satisfied as described later in conjunction with FIG. 7B.

At block 708, the weld detection circuitry 250 reads the parameter in the data storage device or in the register of the electronic data processor of the ECU 23 that indicates that the vehicle charging switch 38 has a normally closed auxiliary contact 154.

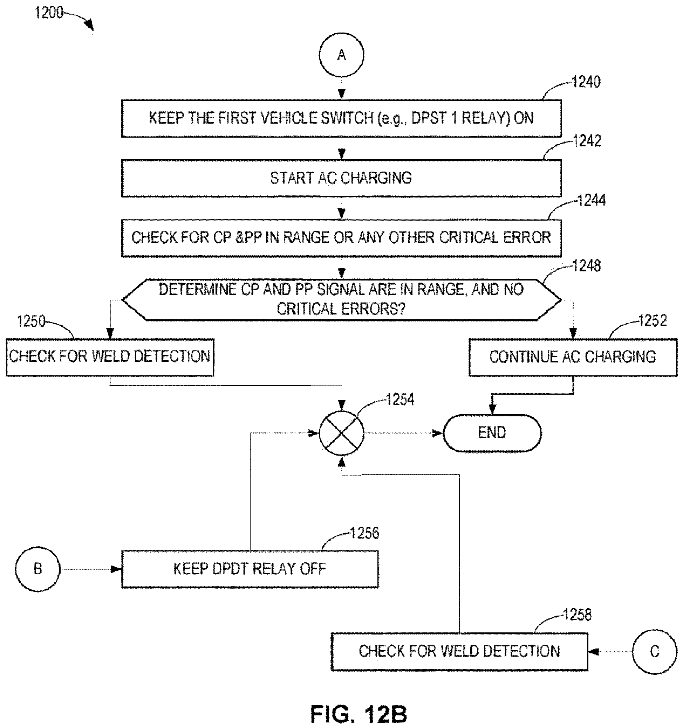

At block 710, the weld detection circuitry 250 determines whether a DC voltage is at the auxiliary input or input pole (e.g., switched terminals 28, 128) of the vehicle charging switch 38 with the normally closed auxiliary contact 154. In some examples, the weld detection circuitry 250 determines whether the DC voltage is at the auxiliary input based on a reading from the OBC 40. If the weld detection circuitry 250 determines a DC voltage at the auxiliary input (block 710: YES), then the process proceeds to block 712, where the ECU 23 has detected a weld fault and the weld fault may be flagged or recorded in the data storage device or register of the ECU 23, in accordance with the flowchart of FIG. 12B. However, if the weld detection circuitry 250 does not detect or sense a DC voltage at the auxiliary input of the input pole (e.g., switched terminals 28, 128) of vehicle charging switch 38 (block 710: NO), a weld contact is not detected and control proceeds to block 714.

At block 714, the weld detection circuitry 250 determines that a eld contact is not detected, and generates a signal that a weld contact is not detected. Based on the generated signal, the weld detection circuitry 250 performs the operations at block 716.

At block 716, the weld detection circuitry 250 causes the bi-directional DC-DC converter 55 to convert a first DC bus voltage (e.g., lower DC bus voltage on first DC bus 202, such as 12 VDC) to a second DC bus voltage (e.g., higher DC bus voltage, such as 350 VDC) on the second DC bus 204.

At block 718, the weld detection circuitry 250 turns on (e.g., via solenoid 46) the vehicle charging switch 38 (e.g., double-pole, double-throw (DPDT) relay or contactor) such that the vehicle charging switch 38 can operate in a DC charging mode, rather than an AC charging mode.

At block 720, the weld detection circuitry 250 determines whether DC voltage is available at the input (pole) of the vehicle charging switch at a predefined level. If the vehicle charging switch 38 (e.g., DPDT relay) has DC voltage available at the input at a predefined level in the DC charging mode, then input pole (e.g., switched terminals 28, 128) will provide a DC output voltage at a pre-defined level (e.g., appropriate for the DC bus level). If DC voltage is available at the input of the switch (block 720: YES), control proceeds to block 724. If DC voltage is not available at the input of the switch (block 720: NO), control proceeds to block 722 and the method continues through block 722. The method continues through block 722 in accordance with the diagnostic process of block 730, which includes blocks 720 and 724.

Accordingly, the weld detection circuitry 250 may generate and/or record a flag (e.g., auxiliary contact normally open equals no weld fault or weld fault equals low logic level, such as zero volts) at block 726, indicative that the vehicle charging switch 38 is working properly, in a data storage device or in a register

After the diagnostic procedure of block 732 finds no weld fault at block 724, the method continues with block 726 in which the weld detection circuitry 250 turns the vehicle charging switch 38 (e.g., DPDT relay) off to check the peak voltage and the PWM duty cycle of CP signal for a sampling interval in block 728 for one or more successive sampling intervals.

At block 730, the weld detection circuitry 250 detects whether the voltage level and the duty cycle of the of the CP signal is at a voltage level (e.g., logic level) within a threshold operating range for the current operational mode of the charging station 10 and vehicle electrical system 214, such as DC charging mode, AC charging mode, charging disabled mode, and idle, sleeping, or stand-by mode. The weld detection circuitry 250 continues with DC charging if the checks for voltage and the PWM duty cycle are consistent with the DC charging mode. The method ends after block 728.

FIG. 7B is a continuation of the flowchart of FIG. 7A including the process of A. At block 732, the vehicle charging switch 38 is determined by the weld detection circuitry 250 as normally open or has a weld fault. If the weld detection circuitry 250 determines the vehicle charging switch 38 is normally open or has a weld fault (block 732: YES), control proceeds to block 734. If the weld detection circuitry 250 determines the vehicle charging switch 38 is not normally open or does not have a weld fault (block 734: NO), the method terminates.

At block 734, the vehicle charging switch 38 (e.g., DPDT relay) is found to be faulty, which is communicated to the ECU 23, the VCU, and/or a BMS 51, 151 via a vehicle data bus 48.

The ECU 23, the OBC 40, and the BMS 51, 151 enter a disabled charging mode of operation at block 736. The process concludes after block 736.

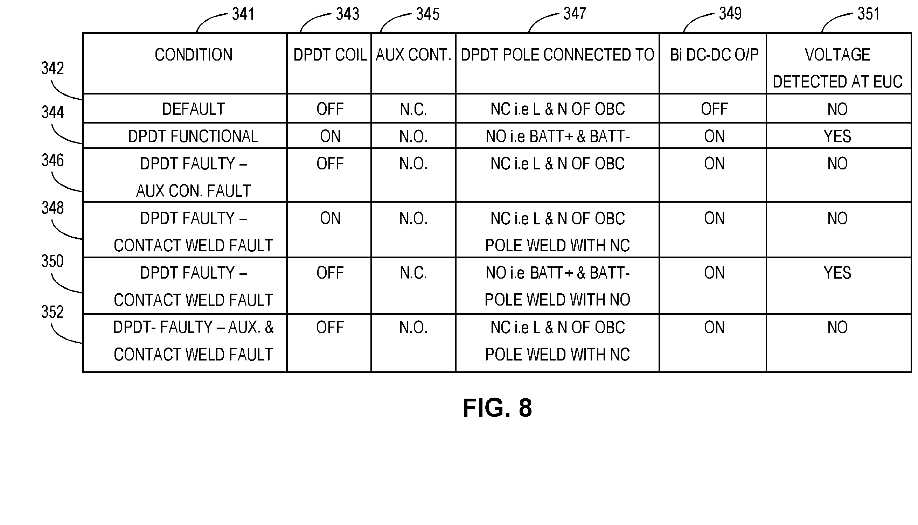

FIG. 8 provides a set of conditions (e.g., switching states) 341 for the configuration of FIG. 4 and the corresponding information: switching state conditions 341 of the vehicle charging switch 38; states 343 (e.g., energized or on versus deenergized or off) of the solenoid 46, coil, or control terminal; states 345 of the auxiliary contact 154; electrical connections 347 of the vehicle charging switch 38 poles or switched terminals; DC-to-DC converter status 349 (e.g., whether the DC-to-DC converter 55 is active or inactive); and voltage detected 351 by the ECU 23 in conjunction with the vehicle charging switch 38.

In a first condition 342 (e.g., DEFAULT), the vehicle charging switch 38 has a solenoid 46 coil that is off; the auxiliary contact 154 is normally closed (N.C.); the poles or switched terminals 28, 128 are connected to the Line terminal (L) and neutral terminal (N) of the OBC 40; the DC-DC converter 55 is off; and no voltage at the auxiliary contact 154 is detected by the ECU 23 or the VCU, which is coupled to the vehicle data bus 48.

In a second condition 344 (e.g., DPDT FUNCTIONAL), the vehicle charging switch 38 has a solenoid 46 coil that is on; the auxiliary contact 154 is normally open (N.O.); the poles or switched terminals 28, 128 are connected to the DC terminals (BATT + and BATT-) of the energy storage device 152, 153 (e.g., battery 50, 150 or DC bus 202, 204) of the OBC 40; the DC-DC converter 55 is on; and voltage is present at the auxiliary contact 154 to be detected by the ECU 23 or the VCU, which is coupled to the vehicle data bus 48.

In a third condition 346 (DPDT FAULTY - AUX. CON. FAULT), the vehicle charging switch 38 has a solenoid 46 coil that is off; the auxiliary contact 154 is normally open; the poles or switched terminals 28, 128 are connected to the Line terminal (L) and neutral terminal (N) of the OBC 40; the DC-DC converter 55 is on; and no voltage at the auxiliary contact 154 is detected by the ECU 23 or by the VCU, which is coupled to the vehicle data bus 48.

In a fourth condition 348 (DPDT FAULTY - CONTACT WELD FAULT), the vehicle charging switch 38 has a solenoid 46 coil that is on; the auxiliary contact 154 is normally open; the poles or switched terminals 28, 128 are connected to the Line terminal (L) and neutral terminal (N) of the OBC 40, where pole weld (e.g., defective vehicle charging switch 38) is associated with a normally closed state; the DC-DC converter 55 is on; and no voltage at the auxiliary contact 154 is detected by the ECU 23 or by the VCU, which is coupled to the vehicle data bus 48.

In a fifth condition 350 (e.g., DPDT FAULTY - CONTACT WELD FAULT), the vehicle charging switch 38 has a solenoid 46 coil that is off; the auxiliary contact 154 is normally closed; the poles or switched terminals 28, 128 are connected to the DC terminals of the energy storage device 152, 153 (e.g., battery 50, 150 or DC bus 202, 204) of the OBC 40; the DC-DC converter 55 is on; and voltage is present at the auxiliary contact 154 and is detected by the ECU 23 or the VCU.

In a sixth condition 352 (DPDT FAULTY - AUX. CONTACT and CONTACT WELD FAULT), the vehicle charging switch 38 has solenoid 46 coil that is off; the auxiliary contact 154 is normally open; the poles or switched terminals 28, 128 are connected to the Line terminal (L) and neutral terminal (N) of the OBC 40; the DC-DC converter 55 is on; and no voltage at the auxiliary contact 154 is detected by the ECU 23 or by the VCU, which is coupled to the vehicle data bus 48.

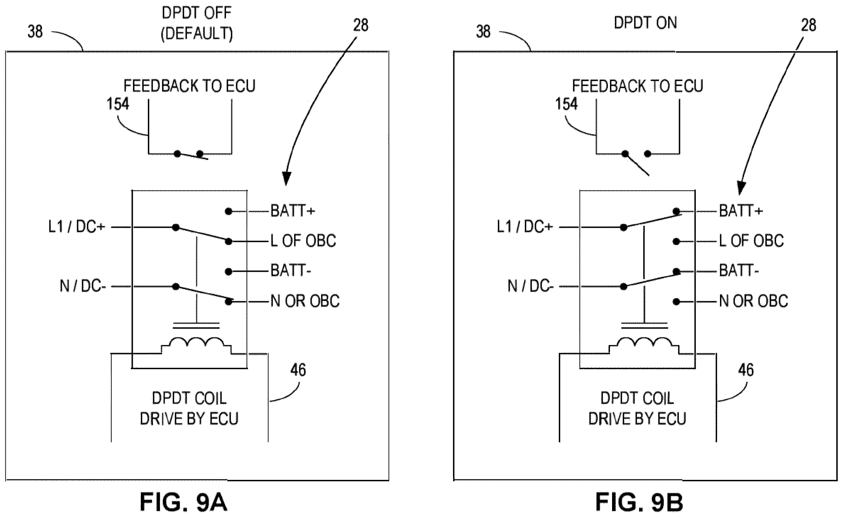

FIGS. 9A and 9B provide an illustrative diagram of the vehicle charging switch 38 as a double-pole, double throw (DPDT) relay or contactor in an off state (e.g., default) (FIG. 9A) and in an on state (FIG. 9B).

FIG. 9A shows the vehicle charging switch 38 or contactor in the off state for the default AC charging inputs of Line 1 and Neutral Line that are connected to the terminals of the OBC 40 that converts the inputted AC voltage from the charging station 10 to DC voltage for charging the battery 50, 150. In the example of FIG. 9A, the auxiliary contact 154 is normally closed to provide feedback to the ECU 23 or the OBC 40.

FIG. 9B shows the vehicle charging switch 38 or contactor in an on state for the DC voltage of DC+ and DC- (e.g., from the charging station 10) that are connected to the positive and negative battery terminals of the battery 50, 150. The auxiliary contact 154 is normally open to provide feedback to the ECU 23 or the OBC 40.

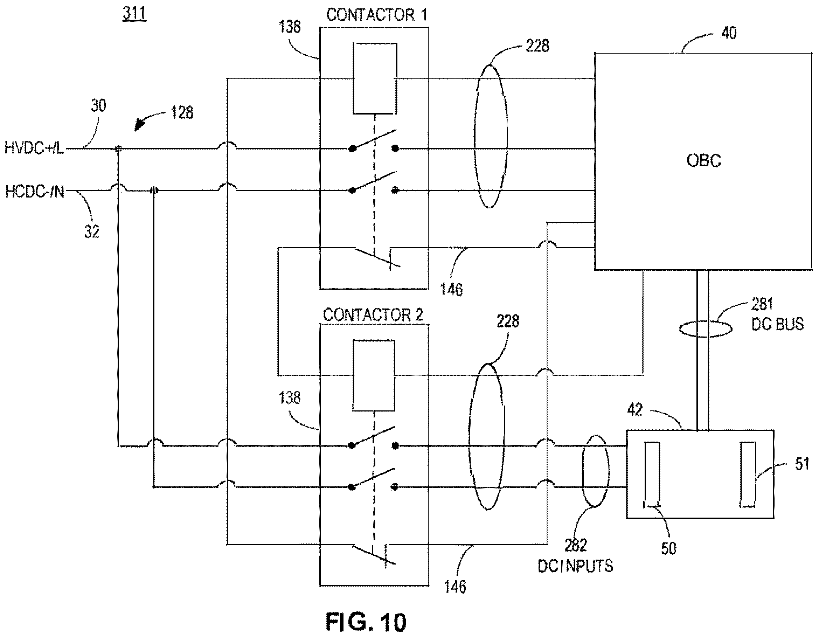

FIG. 10 is a block diagram of a third example charging system 311 that includes a vehicle electrical system, where the charging system 311 has two vehicle charging switches 138 with input terminals 30, 32 in common and separate pairs of switched output terminals 228. In FIG. 10, the input terminals 30, 32 may be referred to as the switched terminals 128.

The vehicle charging switches 138 include relays or contactors. The charging system 311 of FIG. 10 is similar to the charging system 211 of FIG. 4 except the charging system 311 of FIG. 3A replaces the double-pole, double-throw (DPDT) relays (of the vehicle charging switch 38 or contactor) with two double-pole, single-throw (DPST) relays or two DPST contactors. Further, the charging system 311 has the energy storage device 42 that includes the BMS 51 and the battery 50, alone or together with an ultracapacitor, supercapacitor or capacitor bank, where the BMS 51 may be configured integrally or separably from the battery 50.

In FIG. 10, the charging station 10 (not shown) can supply AC voltage to the energy storage device 42 or the battery 50 via a first vehicle charging switch 138 or first contactor, coupled to AC transmission lines or common AC/DC transmission lines 30, 32, in accordance with an AC charging mode. The OBC 40 receives the AC voltage provided by the charging station 10 via the first vehicle charging switch 138. In turn, the OBC 40 is configured to convert the received AC voltage into DC voltage that is applied to a DC bus 281 for the AC charging mode of the battery 50.

Meanwhile, the charging station 10 (not shown) can supply DC energy to the energy storage device 42 or the battery 50 via a second vehicle charging switch 138 or second contactor, coupled to DC transmission lines or common AC/DC transmission lines 30, 32, in accordance with an DC charging mode. The second vehicle charging switch 138 provides DC inputs 282 to the battery 50, the energy storage device 42 and/or the BMS 51. In some examples, the OBC 40 sends messages and/or receives AC/DC voltage via a transmission line 146.

The transmission line 146 connects contactor 1 and contactor 2. In the example of FIG. 10, contactor 1 is normally closed and is connected in series with a coil of contactor 2. Further, contactor 2 is normally closed and is connected in series with a coil of contactor 1. In examples where the charging system 311 is not charging, contactors 1 and 2 are open and their auxiliary contacts are in the normally closed position. In examples where the charging system 311 is charging using AC voltage, contactor 1 operates, and, through a signal generated via the transmission line 146, contactor 2 does not operate. Further, in examples where the charging system 311 is charging using DC voltage, contactor 2 operates, and, through a signal generated via the transmission line 146, contactor 1 does not operate. Therefore, the transmission line 146 ensures that one contactor operates during performance of AC and DC charging.

Further, the vehicle electronics may have common input terminals 30, 32 to support the mutually exclusive application of AC voltage or DC voltage (but not both simultaneously) from the charging station 10 to the same terminals 30, 32, regardless of whether the charging station 10 and vehicle electronics are compatible with the North American Charging station 10 (NACS) connector 12, a Combined Charging Standard (CCS1) connector 12, or another electrical connector 12.

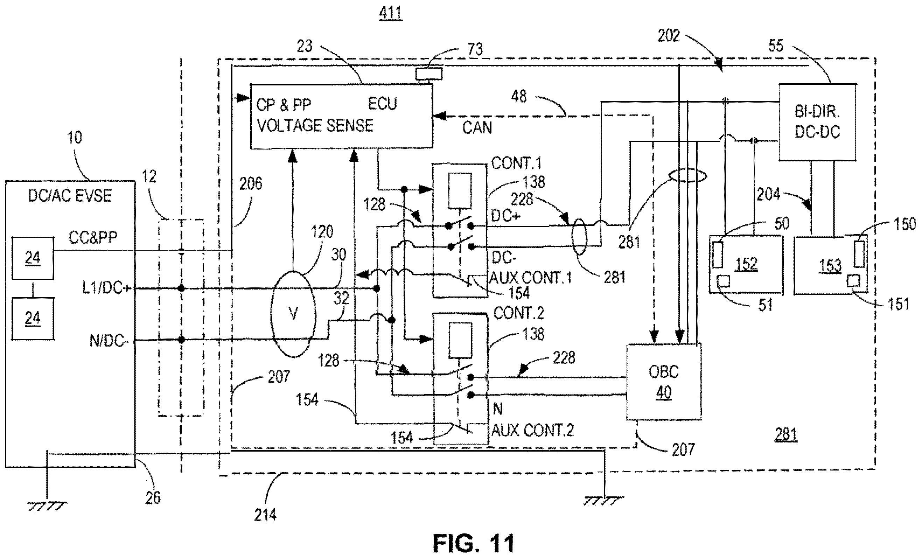

FIG. 11 is a block diagram of another example charging system 411 in which the charging station 10 is connected or coupled to the vehicle electrical system 214, where the vehicle electric system 214 has two vehicle charging switches 138 with input terminals 30, 32 in common and separate pairs of switched output terminals 228. The input terminals 30, 32 may also be referred to as the switched terminals 128. The charging system 411 of FIG. 11 is similar to the charging system 211 of FIG. 4, except the charging system 411 of FIG. 11 replaces a double-pole, double-throw (DPDT) relay (as the vehicle charging switch 38 or contactor) with two double-pole, single-throw (DPST) relay vehicle charging switches 138. In FIG. 11, the vehicle charging switches 138 are illustrated as DPST relays or contactors.

In FIG. 11, the DC output terminals 281 of the OBC 40 are connected to the first DC bus 202, which can be used, in turn, to charge (e.g., in the AC charging mode) the first battery 50 or the energy storage device 152, subject to or under the control of the first BMS 51. Further, in the AC charging mode, the OBC 40 can supply DC energy to the first DC bus 202, which the DC-to-DC converter 55 converts to the voltage level of the second DC bus 204, which can be used, in turn, to charge (e.g., in the AC charging mode) the second battery 150 or energy storage device 153, subject to or under control of the second BMS 151.

FIG. 12A is a flow chart of an example process 1200 for controlling the vehicle electrical system 214 where the charging station 10 is connected or coupled to the vehicle electrical system 214 in accordance with FIG. 10 and/or FIG. 11, in which the vehicle charging switches 138 or contactors include a set of dual-pole, single-throw (DPST) relays or contactors. The example machine-readable instructions and/or the example operations 1200 of FIG. 12A begin at block 1202.

At block 1202, the range detection circuitry 240 access the PP signal from the charging station 10. In some examples, the range detection circuitry 240 accesses and measures the range of the PP signal at block 1202.

At block 1204, the range detection circuitry 240 determines if the PP signal at the transmission lines 206, 207 is within a target range (e.g., target logic level). If the range detection circuitry 240 determines that the PP signal is within the target range (e.g., for a sampling interval or series of sampling intervals) (block 1204: YES), the method continues with block 1206. However, if the range detection circuitry 240 determines that the PP signal is not within the target range (block 1204: NO), the method continues block 1230 and terminates, or control returns to block 1202 (e.g., for a later or next sampling interval).

At block 1206, the weld detection circuitry 250 checks the vehicle charging switch 38 (e.g., DPST relay or contactor) for welds or performs the weld-detection diagnostic test, where the contacts fail the test if in a closed state, fused state, or welded state after being fused by excessive heat. If the weld detection circuitry 250 does not detect a weld, welded state, or fused state of one or more contacts of the vehicle charging switch 38 or contactor (block 1208: YES), the method continues with block 1210. However, if the weld detection circuitry 250 detects a weld, welded state, or fused state of one or more contacts of the vehicle charging switch 38 or contactor (block 1208: NO), the method continues with block 1230 (e.g., logic OR operator), which terminates the method.

At block 1210, the duty cycle measurement circuitry 230 checks for the target voltage and target duty cycle (range) of the pulse-width-modulation (PWM) that is associated with the CP signal on the transmission lines 206, 207. The controller circuitry 151 selects between or among an DC charging mode (e.g., the first mode), an AC charging mode (e.g., the second mode), and a charging disabled mode based on evaluation of the observed duty cycle of PWM of the CP signal and the observed target voltage level (e.g., peak magnitude) of the CP signal (e.g., as illustrated in block 1212, block 1218, block 1232, and block 1236), where the CP signal is generated by the charging station 10 and transmitted to the vehicle electrical system 214 via the connector 12 and associated cable that interconnects the charging station 10 and the vehicle electronics 214, where the vehicle is stationary. Furthermore in certain examples, to engage the DC charging mode, the AC charging mode, or charging disabled mode, as illustrated in block 1202 and block 1224, the range detection circuitry 240 is configured to read or evaluate a PP signal on the transmission lines 206, 207 to determine whether the charging station 10 is properly connected to the vehicle electrical system 14 of the vehicle via the connector 12 and associated cable.

At block 1212, the duty cycle measurement circuitry 230 determines whether the received CP signal (from the charging station 10 at the transmission lines 206, 207) has a first target voltage level or a second target voltage level, and whether the CP signal has target duty cycle within a first range of approximately equal to or greater than 3% and approximately equal to or less than approximately an upper limit (e.g., approximately 5% or approximately 7%). If the duty cycle measurement circuitry 230 determines that the received CP signal has the first target voltage level (e.g., 9V) and the observed duty cycle is within the first range for one or more sampling intervals (e.g., one or more PWM periods) (block 1212: YES), then the method continues with block 1214, in which the vehicle charging switch 138, such as the DPST relay is operated. However, if the duty cycle measurement circuitry 230 determines that the received CP signal does not satisfy the first target level (e.g., 9V) or the duty cycle of PWM is not within the first range (e.g., of approximately equal to or greater than 3% and approximately equal to or less than approximately 5% or approximately 7%) (block 1212: NO), then the method continues with block 1232.

At block 1214, the DC charger circuitry 260 operates a second vehicle charging switch 138 (e.g., double-pole single-throw relay or contactor) consistent with a preparatory state or standby state for a DC charging mode. In the DC charging preparatory or standby mode, the DC charger circuitry 260 detects that the CP signal is at the first voltage level (e.g., 9 V).

As illustrated in the DC charging preparatory mode, block 1214 is followed by a logical path to block 1216 and 1218 in which the duty cycle measurement circuitry 230 checks that the CP signal and the duty cycle of the PWM of the CP signal fall within the respective ranges for the DC charging mode.

To transition to the DC charging mode from the DC charging preparatory mode, in block 1218, the duty cycle measurement circuitry 230 detects or confirms that the first voltage level has transitioned from the first voltage level (e.g., 9 V) to the second voltage level (e.g., 6 V), while the observed duty cycle of the PWM of the CP signal is within the first range (e.g., from approximately equal to or greater than 3% and approximately equal to or less than approximately an upper limit of approximately 5% to approximately 7%). As illustrated, if the duty cycle measurement circuitry 230 determines that the observed voltage of the CP signal is at the second voltage level and the observed duty cycle is within the first range (block 1218: YES), then control proceeds to block 1220 and 1222 where the DC charger circuitry 260 authorizes (e.g., starts or maintains) DC charging mode and keeps the second vehicle charging switch 38 in an appropriate state (e.g., on state for normally closed DPST relay) for DC charging of the energy storage device 42 on the vehicle.

However, if the duty cycle measurement circuitry 230 determines that the observed voltage of the CP signal is not at the second voltage level or the observed duty cycle is not within the first range (block 1218: NO), then the process 1200 proceeds to method B of FIG. 12B and the second vehicle charging switch 138 (e.g., DPST relay) is kept in an appropriate state (e.g., off state) for a disabled charging mode. The disabled charging mode proceeds from process B in FIG. 12B where the DPDT relay is kept off at block 1256 and the method 1200 ends.

At block 1224, or at regular, periodic, or aperiodic intervals during the DC charging mode, the duty cycle measurement circuitry 230 checks or confirms whether the CP signal and the PP signal at the transmission lines 206, 207 are in the operational range (e.g., observed duty cycle range of PWM and corresponding voltage level ranges) for DC charging mode or whether there is any other critical error. Further, if the duty cycle measurement circuitry 230 determines that the observed CP signal and PP signal are within the operational range for DC charging (block 1226: YES), the method continues with block 1228, where DC charging mode is continued. In an alternate example, after DC charging continues in block 1228, the method 1200 may wait an interval or period and return to block 1226 on a regular basis or after waiting for the interval or period. After block 1228, the method 1200 ends.

However, if the duty cycle measurement circuitry 230 determines that the observed CP signal or the observed PP signal are not within the operational range for DC charging (block 1226: NO), the method 1200 continues with method C in FIG. 12B in which the weld detection circuitry 250 is configured to check for welding of fusing of the contact of the second vehicle charging switch 38 (e.g., DPST relay) at block 1258, after which the method 1200 ends (e.g., via block 1254, logical OR).

At block 1232, the duty cycle measurement circuitry 230 determines whether the received CP signal has the first target voltage level or the second target voltage level, and whether the PWM of the CP signal has an observed duty cycle within a second range of approximately equal to or greater than 8% and approximately equal to or less than 97%. If the duty cycle measurement circuitry 230 determines that the received CP signal has the first target voltage level (e.g., 9V) and an observed duty cycle within a second range for one or more sampling intervals (e.g., one or more PWM periods) (block 1232: YES), then the method continues with block 1234 in which the first vehicle charging switch 38 (e.g., double pole, single-throw relay or contactor) can be operated or controlled in an AC charging preparatory mode. However, if the duty cycle measurement circuitry 230 determines that the received CP signal does not satisfy the first target level (e.g., 9V) or the observed duty cycle is not within the second range (block 1232: NO), then the method 1200 continues with block 1230 (e.g., logical OR) and terminates.

In block 1234, the AC charger circuitry 270 operates the first vehicle charging switch 38 (e.g., double-pole, single throw relay) consistent with a preparatory state or standby state for an AC charging mode. In the preparatory or standby mode, at block 1236, the duty cycle measurement circuitry 230 detects if the received CP signal has an observed second target voltage level (e.g., 6 V) and if the CP signal has an observed duty cycle within the second range (e.g., approximately equal to or greater than 8% and approximately equal to or less than 97%).

To transition to the AC charging mode, if the CP signal has a duty cycle within the second range and if the second voltage level (e.g., 6V) is detected (block 1236: YES) by the duty cycle measurement circuitry 230, control proceeds through process A to FIG. 12B. If the CP signal does not have a duty cycle within the second range and/or the second voltage level is not detected (block 1236: NO) by the duty cycle measurement circuitry 230, control proceeds to block 1238.

At block 1238, the duty cycle measurement circuitry 120 keeps the first vehicle charging switch (e.g., DPST 1 relay) off. After block 1238, the method terminates.

At block 1240 and 1242, the AC charger circuitry 270 can execute the AC charging mode with current constraints after or by keeping the first vehicle charging switch 138 (e.g., double-pole, single-throw relay or contactor) in an appropriate state (e.g., on state for a normally open contact).

At block 1242, the AC charger circuitry 270 starts AC charging. In accordance with block 1242, the second range of the AC charging mode may be subject to a current constraint such as a permitted maximum AC charging current that is proportional to the observed duty cycle of the PWM of the CP signal multiplied by a power coefficient.

After block 1244, or at regular, periodic, or aperiodicintervals during the AC charging mode, the duty cycle measurement circuitry 230 checks or confirms whether the CP signal and the PP signal on or at the transmission lines 206, 207 are in the operational range (e.g., observed duty cycle range and corresponding voltage level ranges) for the AC charging mode or whether there is any other critical error. Further, if the duty cycle measurement circuitry 230 determines that the observed CP signal and PP signal are within the operational range for AC charging (block 1248: YES), the method 1200 continues with block 1252 where the AC charging mode is continued.

In an alternate example, after AC charging continues in block 1252, the method 1200 may wait an interval and return to block 1244 on a regular basis or after waiting for the interval.

However, if the duty cycle measurement circuitry 230 determines that the observed CP signal or the observed PP signal are not within the operational range for AC charging (block 1248: NO), the method 1200 continues with block 1250 in which the weld detection circuitry 250 checks for welding or fusing of the contact of the first vehicle charging switch 138 (e.g., DPST relay), after which the method ends through block 1254 (e.g., via logical OR).

In some examples, the charging station 10 and vehicle electrical system 214 may be configured to charge the energy storage device 152, 153 (e.g., the battery 50, 150) of the vehicle with dual-mode charging in accordance with a preliminary DC charging mode followed by a finishing AC charging mode, in a single charging session, for a depleted battery 50 with a low state of charge or based on instructions or requests from the BMS 51, 151 of the vehicle or based on the thermal load on the charging station 10, such as the ambient temperature and active charging time for other vehicles prior to the charging of the energy storage device 42 of the present vehicle. The charging station 10 may change the CP signal on the transmission lines 206, 207, the PWM transmitted duty cycle or the transmitted voltage level to adjust or establish a combination of a preliminary DC charging mode followed by a finishing AC charging mode, where the charging station 10 may respond to requests from the BMS 51, 151, temperature sensing system/thermal management system to effectuate or control a combination of a preliminary DC charging mode followed by a finishing AC charging mode.

In some examples, the charging station 10 and vehicle electrical system 214 may be configured to charge the energy storage device 152, 153 (e.g., battery 50, 150) of the vehicle with dual mode charging. In this example, the dual mode charging includes a preliminary AC charging mode followed by a finishing DC charging mode, in a single charging session. The dual mode charging can be based on instructions or requests from the BMS 50, 150 of the vehicle or based on the thermal load on the charging station 10, such as the ambient temperature and active charging time for other vehicles prior to the charging of the energy storage device 152, 153 of the present vehicle. For example, the DC charging mode may be available after AC charging mode for a single charging session of the charging station 10 if the temperature range of the energy storage device 152, 153 on the vehicle and if the temperature range of the charging station 10 are at or below applicable limit temperatures within the normal temperature operating range. The charging station 10 may change the CP signal, the transmitted duty cycle or the transmitted voltage level to adjust or establish a combination of a preliminary AC charging mode followed by a finishing DC charging mode, where the charging station 10 may respond to requests from the BMS 51, 151, or temperature sensing system/thermal management system to effectuate or control a combination of the preliminary AC charging mode followed by the finishing DC charging mode.

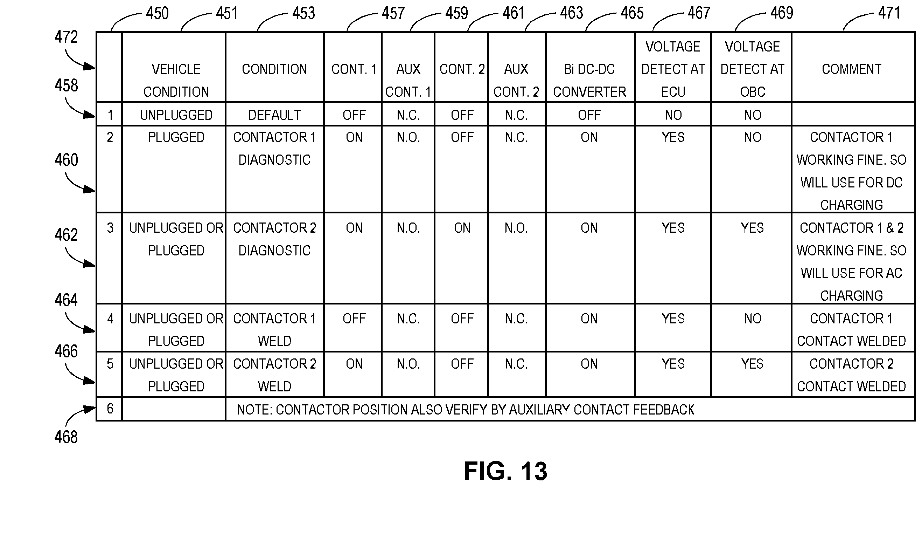

FIG. 13 is a chart of example states for controlling a vehicle electrical system 214, where the charging station 10 is connected or coupled to a vehicle electrical system 214 in accordance with FIG. 10 or FIG. 11. As shown above in connection with FIGS. 10-11, the vehicle charging switches 138 include a first contactor (e.g., DC contactor with dual-pole, single- throw configuration) and a second contactor (e.g., AC contactor with dual-pole, single- throw configuration). In particular, FIG. 13 may be referred to as a truth table for diagnostics states of the at least one vehicle charging switch 138 and includes the vehicle electrical system 214 where states of components are listed in the top row 472.

In the chart of FIG. 13, the first column 450 is a diagnostic process number; the second column 451 is the vehicle condition; the third column 453 is the component condition; the fourth column 457 is the state of contacts or switched terminals 128, 228 of the first vehicle charging switch 138; the fifth column 459 is the rest state of the auxiliary contact 154 of the first vehicle charging switch 138; the sixth column 461 is the state of the contacts or switched terminals 128, 228 of the second vehicle charging switch 138; the seventh column 463 is the rest state of the auxiliary contact 154 of the second vehicle charging switch 138; the eighth column 465 is the state of the DC-to-DC converter 55; the ninth column 467 is whether or not voltage is detected at the ECU 23; the tenth column 469 is whether or not voltage is detected at the OBC 40; and the eleventh column 471 are text comments.

In the row 458, the first diagnostic process is the default condition or rest state of the components if the vehicle electrical system 214 is disconnected or unplugged from the charging station 10. The first diagnostic process 459 has the first vehicle charging switch 138 (e.g., contactor 1) in an off state; the first auxiliary contact 154 (of the first vehicle charging switch 138) is normally closed; the second vehicle charging switch 138 (e.g., contactor 2) is in an off state; the second auxiliary contact 154 (of the second vehicle charging switch 138) is normally closed; the DC-to-DC convertor is off; no voltage is detected at the ECU 23; and no voltage is detected at the OBC 40, where the voltage is associated with the CP signal or the PP signal at the transmission lines 206, 207.

In row 460, the second diagnostic process is the first switch diagnostic process (e.g., contactor 1 diagnostic process), where the vehicle electrical system 214 is plugged into the charging station 10. The second diagnostic process includes that the first vehicle charging switch 138 is in an on state; the first auxiliary contact 154 (of the first vehicle charging switch 138) is normally open; the second switch138 is in an off state; the second auxiliary contact 154 (of the second vehicle charging switch 138) is normally closed; the DC-to-DC converter is on,; voltage is detected at the ECU 23; and no voltage is detected at the OBC 40. If the second diagnostic process is successful, then the first vehicle charging switch 138 is working fine and DC charging is available based on the status of the first vehicle charging switch 138, subject to thermal constraints and the BMS 51, 151 constraints.

In row 462, the third diagnostic process is the second switch diagnostic process (e.g., contactor 2 diagnostic process), where the vehicle electrical system 214 can be unplugged or plugged into the charging station 10. The third diagnostic process includes that the first vehicle charging switch 138 is in an on state; the first auxiliary contact 154 (of the first vehicle charging switch 138) is normally open; the second vehicle charging switch 138 is in an on state; the second auxiliary contact 154 (of the second vehicle charging switch 138) is normally open; the DC-to-DC converter is on; voltage is detected at the ECU 23; and voltage is detected at the OBC 40. If the third diagnostic process is successful, then the first vehicle charging switch 138 and the second vehicle charging switch 138 are working fine and AC charging is available based on the status of the first vehicle charging switch 138, subject to thermal constraints and the BMS 51, 151 constraints.

In row 464, the fourth diagnostic process is the first switch welding diagnostic process (e.g., contactor 1 diagnostic process), where the vehicle electrical system 214 can be unplugged or plugged into the charging station 10. The fourth diagnostic process includes that the first vehicle charging switch 138 is in an off state; the first auxiliary contact 154 (of the first vehicle charging switch 138) is normally closed; the second vehicle charging switch 138 is in an off state; the second auxiliary contact 154 (of the second vehicle charging switch 138) is normally closed; the DC-to-DC converter is on; voltage is detected at the ECU 23; and no voltage is detected at the OBS 40. If the fourth diagnostic process is unsuccessful, then the first switch 138 has welded, melded, or fused contacts that are stuck in a normally closed state. If the first switch has welded, melded or fused contacts the first switch is stuck in a state that may only support continuous DC charging, without being able to disconnect the DC lines from the energy storage device 152, 153 or battery 50, 150, except by removing or disconnecting the connector 12 and associated cable between the charger station 10 and the vehicle electrical system 214.

In row 466, the fifth diagnostic process is the second switch welding diagnostic process (e.g., contactor 2 diagnostic process), where the vehicle electrical system is unplugged or plugged into the charging station 10. The fifth diagnostic process includes that the first vehicle charging switch 138 is in an on state; the first auxiliary contact 154 (of the first vehicle charging switch 138) is normally open; the second switch is in an off state; the second auxiliary contact 154 (of the second vehicle charging switch 138) is normally closed; the DC-to-DC converter is on; voltage is detected at the ECU 23; and voltage is detected at the OBC 40. If the fifth diagnostic process is unsuccessful, then the second vehicle charging switch 138 (e.g., contactor 2) has welded, melded, or fused contacts that are stuck in a normally closed state. If the first vehicle charging switch 138 (e.g., contactor 1) has welded, melded or fused contacts the first switch is stuck in a state that may only support continuous AC charging, without being able to disconnect the AC lines from the energy storage device 152, 153, except by removing or disconnecting the connector 12 and associated cable between the charger station 10 and the vehicle electrical system 214.

In row 468, it is noted that the relay or contactor position of the vehicle charging switch 138 can be verified by evaluation of the auxiliary contact 154 position or feedback.

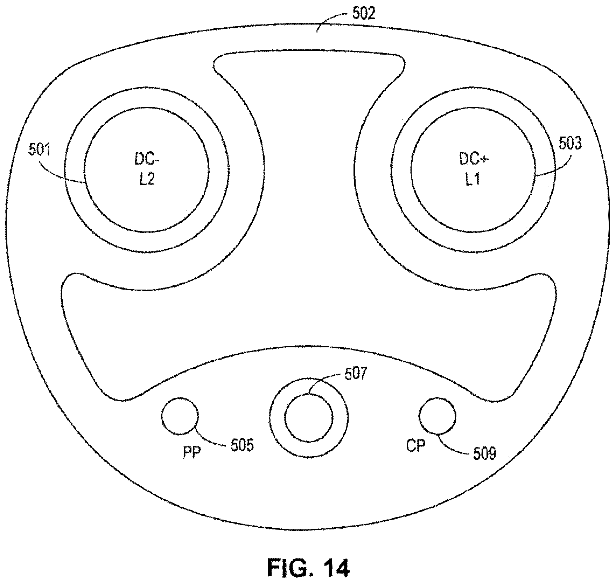

FIG. 14 is an illustration of an example connector 12 that is capable of conforming to the North American Charging Standard (NACS) for the charging station 10 that is connected or coupled to the vehicle electrical system 14 of FIG. 3. The connector 12 has an interface 502 that plugs into the vehicle electrical system 14. The interface 502 has a common terminals or common (input) terminals for DC voltage and AC voltage charging energy that is provided to the vehicle electrical system 14 and its energy storage device 42 (e.g., battery 50). As illustrated, a first common input terminal 503 is labeled positive DC and line 1 (L1) for AC voltage, and a second common input terminal 501 is labeled negative DC and line 2 (L2) for AC, where L2 may be referred to as an AC neutral terminal. The common (input) terminals 501, 503 generally support the transmission of DC or AC voltage, but not both simultaneously, from the charging station 10. The BMS 50 of the vehicle electrical system 14, or the thermal management system of the charging station 10, or both, may determine whether DC charging is available, whether AC charging is available, or whether both DC and AC charging are available (sequentially) for a charging session. The charging session is defined by one vehicle that is docked or connected, via its vehicle electrical system 14, to the charging station 10 for imparting a charge to the energy storage device 42 on the vehicle.

The connector 12 has communications signals or logic level signal receivers, such as the CP signal receiver at terminal 509 and the PP signal receiver at terminal 505, which are generated by the charging station 10 alone, or together with the data communications from the BMS 51, 151 to the charging station 10. The charging station 10 connector 12 has a ground 507 (e.g., chassis ground or Earth ground).

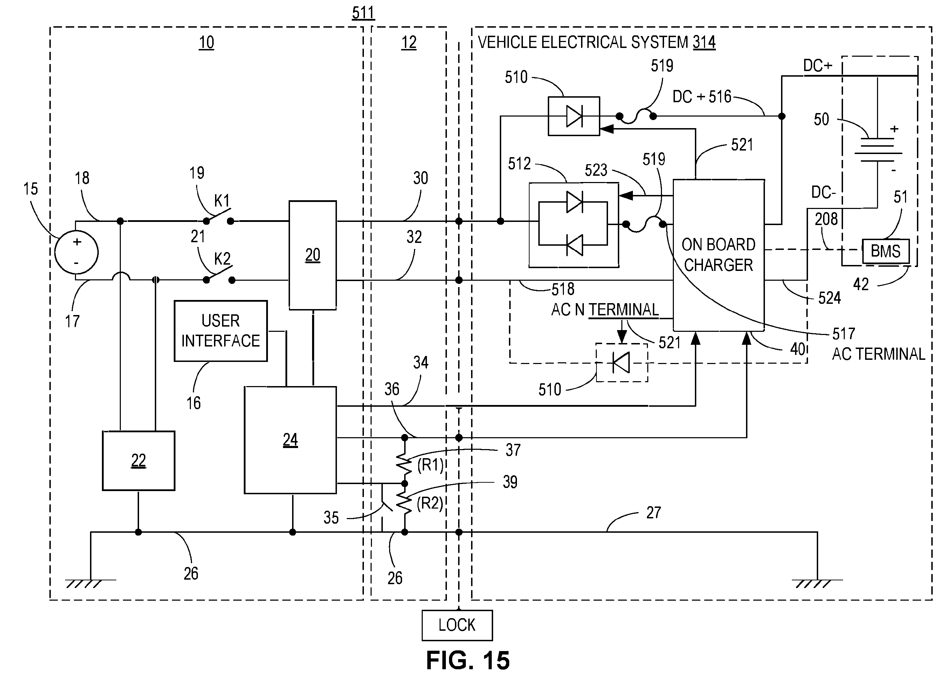

FIG. 15 is a block diagram of an example charging system 511 with the charging station 10 that is connected or coupled to an example vehicle electrical system 314, where the vehicle electrical system 314 includes example solid-state switches 510, 512. The vehicle electrical system 314 of FIG. 15 is similar to the vehicle electrical system 14 of FIG. 4, except two or three solid-state switches 510, 512 replace the vehicle charging switch 38. For example, a first solid-state switch 512 includes an alternating-current, semiconductor switch, and a second solid state switch 510 includes a direct-current semiconductor switch 38, where each semiconductor switch may include a transistor, a thyristor, or another suitable semiconductor device. For example, the thyristor may include a reverse-blocking semiconductor device (e.g., triode) that has three p-n junctions and a gate electrode (e.g., which can be biased) to control an on-state and an off-state within a certain quadrant or limited region of the cathode voltage-current characteristic (graph). A p-n junction is an interface region between a p-type semiconductor and an n-type semiconductor.

In FIG. 15, the first solid-state semiconductor switch 512 receives a Line 1 AC signal from the charging station 10 on input terminal 30, where the OBC 40 can generate a control signal at a control terminal 523 that is inputted to the switch 512 to control the state (e.g., on state (connected), or off state (disconnected)) of its switched terminals 517. In an example of AC charging mode, if the OBC 40 is authorized by the BMS 51 to charge the battery 50 or the energy storage device 42 in an AC charging mode, the OBC 40 may send a control signal to the control terminal 523 of the first switch 512 to electrically connect switched terminals 517 for the transmission of the AC Line 1 signal. Meanwhile, the AC Line 2 signal or neutral signal (e.g., designated AC N) of input terminal 518 may be coupled directly to AC N terminal 521 of the OBC 40, where the OBC 40 includes a rectifier, such as full-wave rectifier or a bi-directional inverter to convert the inputted alternating current (AC) signal at terminals 517, 518 to a direct current signal at DC terminals 516, 524 that are coupled to the battery 50 or the energy storage device 42 for charging, discharging or managing the battery 50 or the energy storage device 42.

In an example of the DC charging mode, if the OBC 40 is authorized by the BMS 51 to charge the battery 50 or the energy storage device 42 in an DC charging mode, the OBC 40 may send a control signal to the control terminal 521 of one or more second switches 510 (e.g., both second switches) to electrically connect the switched terminals 516 for the transmission of the DC + signal at the positive DC terminal 516. Meanwhile, the DC- signal of the input terminal 32 may be coupled directly to DC negative/AC neutral terminal 518 of the OBC 40, where the OBC 40 includes a rectifier (e.g., diode), such as a half-wave rectifier, or pass-through transmission line to a direct current signal at DC terminal 524, such that DC terminals 516, 524 are coupled to the battery 50 or the energy storage device 42. FIG. 15 has one or more optional fuses 519 to limit the maximum current flow in the DC bus, DC lines, or AC lines that are connected to the battery 50 or energy storage device 42.

Alternately, an optional solid state relay 510 (illustrated in dashed lines) is installed in FIG. 15 to support the flow of negative voltage from the input terminal 32 to the negative terminal 524 of the battery 50 or battery management system 51.

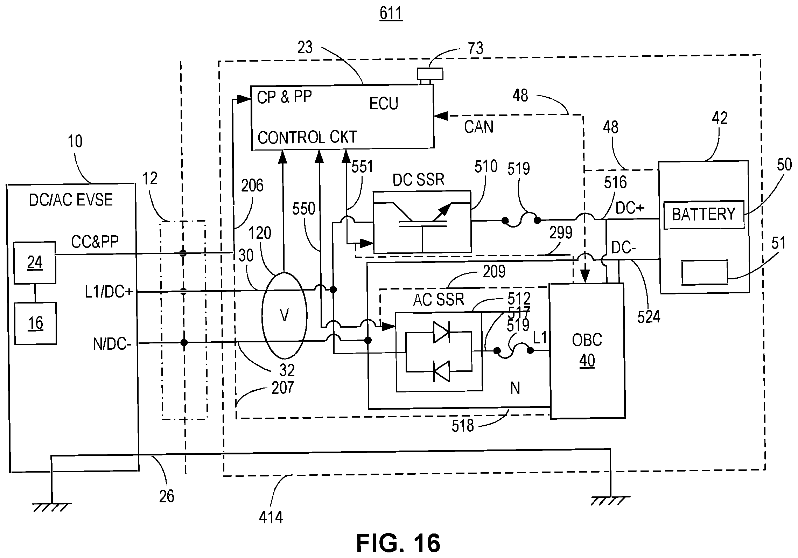

FIG. 16 is a block diagram of an example charging system 611 that includes the charging station 10 that is connected or coupled to an example vehicle electrical system 414, where the vehicle electrical system 414 includes solid-state switches 510, 512. The vehicle electrical system 414 of FIG. 16 is similar to the vehicle electrical system 114 of FIG. 4, except two solid state switches replace the vehicle charging switch 38.

In FIG. 16, the ECU 23 is configured to receive the CP signal and the PP signal via the transmission lines 206. Similarly, the OBC 40 is configured to receive the CP signal and the PP signal via the transmission lines 207, as indicated by the dashed lines.

The first solid-state semiconductor switch 512 receives a Line 1 AC signal from the charging station 10 on input terminal 30, where the OBC 40 or the ECU 23 can generate a control signal, via terminal 550, that is inputted to the control terminal of the AC switch 512 to control the state (e.g., on state, or off state) of its switched terminals 517. In an example AC charging mode, if the OBC 40 is authorized by the BMS 51 to charge the battery 50 or the energy storage device 42 in an AC charging mode, the OBC 40, via terminal 209 (or the ECU via terminal 550) may send a control signal to the control terminal of the first switch 512 to electrically connect the switched terminals 517 for the transmission of the AC Line 1 signal. Meanwhile, the AC Line 2 signal or neutral signal of input terminal 32 may be coupled directly to AC N terminal 518 of the OBC 40, where the OBC 40 includes a rectifier, such as full-wave rectifier or a bi-directional inverter to convert the inputted alternating current signal to a direct current signal at DC terminals 516, 524 that are coupled to the battery 50 or the energy storage device 42.

In an example of the DC charging mode, if the OBC 40 is authorized by the BMS 51 to charge the battery 50 or the energy storage device 42 in an DC charging mode, the OBC 40 (via a control terminal 299) or the ECU 23 may send a control signal to the control terminal 551 (e.g., base or gate) of one or more second switches 510 to electrically connect the switched terminals 516 for the transmission of the DC + signal at the positive DC terminal 516. Meanwhile, the DC- signal of input terminal 32 may be coupled directly to DC negative terminal of the battery 50 or the energy storage device 42, or the BMS 51. FIG. 16 has one or more optional fuses 519 to limit the maximum current flow in the DC bus or DC lines that are connected to the battery 50 or the energy storage device 42.

FIG. 17 is a block diagram of an example programmable circuitry platform 1700 structured to execute and/or instantiate the example machine-readable instructions and/or the example operations of FIGS. 5-7B and 12A-12B to implement the controller circuitry 151 and charger circuitry 156 of FIG. 2. The programmable circuitry platform 1700 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, , or any other type of computing and/or electronic device.

The programmable circuitry platform 1700 of the illustrated example includes programmable circuitry 1712. The programmable circuitry 1712 of the illustrated example is hardware. For example, the programmable circuitry 1712 can be implemented by one or more integrated circuits, logic circuits, FPGAs, microprocessors, CPUs, GPUs, DSPs, and/or microcontrollers from any desired family or manufacturer. The programmable circuitry 1712 may be implemented by one or more semiconductor based (e.g., silicon based) devices. In this example, the programmable circuitry 1712 implements the connection determination circuitry 210, the diagnostic circuitry 220, the duty cycle measurement circuitry 230, the range detection circuitry 240, the weld detection circuitry 250, the DC charger circuitry 260, the AC charger circuitry 270, the interface circuitry 280, and the user interface circuitry 290.

The programmable circuitry 1712 of the illustrated example includes a local memory 1713 (e.g., a cache, registers, etc.). The programmable circuitry 1712 of the illustrated example is in communication with main memory 1714, 1716, which includes a volatile memory 1714 and a non-volatile memory 1716, by a bus 1718. The volatile memory 1714 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1716 may be implemented by flash memory and/or any other desired type of memory device. Access to the main memory 1714, 1716 of the illustrated example is controlled by a memory controller 1717. In some examples, the memory controller 1717 may be implemented by one or more integrated circuits, logic circuits, microcontrollers from any desired family or manufacturer, or any other type of circuitry to manage the flow of data going to and from the main memory 1714, 1716.

The programmable circuitry platform 1700 of the illustrated example also includes interface circuitry 1720. The interface circuitry 1720 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 1722 are connected to the interface circuitry 1720. The input device(s) 1722 permit(s) a user (e.g., a human user, a machine user, etc.) to enter data and/or commands into the programmable circuitry 1712. The input device(s) 1722 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1724 are also connected to the interface circuitry 1720 of the illustrated example. The output device(s) 1724 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1720 of the illustrated example, thus, typically includes a graphics driver card, a graphics driver chip, and/or graphics processor circuitry such as a GPU.

The interface circuitry 1720 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1726. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1700 of the illustrated example also includes one or more mass storage discs or devices 1728 to store firmware, software, and/or data. Examples of such mass storage discs or devices 1728 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 1732, which may be implemented by the machine-readable instructions of FIGS. 5-7B and 12A-12B, may be stored in the mass storage device 1728, in the volatile memory 1714, in the non-volatile memory 1716, and/or on at least one non-transitory computer readable storage medium such as a CD or DVD which may be removable.

FIG. 18 is a block diagram of an example implementation of the programmable circuitry 1712 of FIG. 17. In this example, the programmable circuitry 1712 of FIG. 17 is implemented by a microprocessor 1800. For example, the microprocessor 1800 may be a general-purpose microprocessor (e.g., general-purpose microprocessor circuitry). The microprocessor 1800 executes some or all of the machine-readable instructions of the flowcharts of FIGS. 5-7B and 12A-12B to effectively instantiate the circuitry of FIG. 2 as logic circuits to perform operations corresponding to those machine-readable instructions. In some such examples, the circuitry of FIG. 2 is instantiated by the hardware circuits of the microprocessor 1800 in combination with the machine-readable instructions. For example, the microprocessor 1800 may be implemented by multi-core hardware circuitry such as a CPU, a DSP, a GPU, an XPU, etc. Although it may include any number of example cores 1802 (e.g., 1 core), the microprocessor 1800 of this example is a multi-core semiconductor device including N cores. The cores 1802 of the microprocessor 1800 may operate independently or may cooperate to execute machine-readable instructions. For example, machine code corresponding to a firmware program, an embedded software program, or a software program may be executed by one of the cores 1802 or may be executed by multiple ones of the cores 1802 at the same or different times. In some examples, the machine code corresponding to the firmware program, the embedded software program, or the software program is split into threads and executed in parallel by two or more of the cores 1802. The software program may correspond to a portion, or all of the machine-readable instructions and/or operations represented by the flowcharts of FIGS. 5-7B and 12A-12B.

The cores 1802 may communicate by a first example bus 1804. In some examples, the first bus 1804 may be implemented by a communication bus to effectuate communication associated with one(s) of the cores 1802. For example, the first bus 1804 may be implemented by at least one of an Inter-Integrated Circuit (I2C) bus, a Serial Peripheral Interface (SPI) bus, a PCI bus, or a PCIe bus. Additionally or alternatively, the first bus 1804 may be implemented by any other type of computing or electrical bus. The cores 1802 may obtain data, instructions, and/or signals from one or more external devices by example interface circuitry 1806. The cores 1802 may output data, instructions, and/or signals to the one or more external devices by the interface circuitry 1806. Although the cores 1802 of this example include example local memory 1820 (e.g., Level 1 (L1) cache that may be split into an L1 data cache and an L1 instruction cache), the microprocessor 1800 also includes example shared memory 1810 that may be shared by the cores (e.g., Level 2 (L2 cache)) for high-speed access to data and/or instructions. Data and/or instructions may be transferred (e.g., shared) by writing to and/or reading from the shared memory 1810. The local memory 1820 of each of the cores 1802 and the shared memory 1810 may be part of a hierarchy of storage devices including multiple levels of cache memory and the main memory (e.g., the main memory 1714, 1716 of FIG. 17). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1802 may be referred to as a CPU, DSP, GPU, etc., or any other type of hardware circuitry. Each core 1802 includes control unit circuitry 1814, arithmetic and logic (AL) circuitry (sometimes referred to as an ALU) 1816, a plurality of registers 1818, the local memory 1820, and a second example bus 1822. Other structures may be present. For example, each core 1802 may include vector unit circuitry, single instruction multiple data (SIMD) unit circuitry, load/store unit (LSU) circuitry, branch/jump unit circuitry, floating-point unit (FPU) circuitry, etc. The control unit circuitry 1814 includes semiconductor-based circuits structured to control (e.g., coordinate) data movement within the corresponding core 1802. The AL circuitry 1816 includes semiconductor-based circuits structured to perform one or more mathematic and/or logic operations on the data within the corresponding core 1802. The AL circuitry 1816 of some examples performs integer based operations. In other examples, the AL circuitry 1816 also performs floating-point operations. In yet other examples, the AL circuitry 1816 may include first AL circuitry that performs integer-based operations and second AL circuitry that performs floating-point operations. In some examples, the AL circuitry 1816 may be referred to as an Arithmetic Logic Unit (ALU).

The registers 1818 are semiconductor-based structures to store data and/or instructions such as results of one or more of the operations performed by the AL circuitry 1816 of the corresponding core 1802. For example, the registers 1818 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1818 may be arranged in a bank as shown in FIG. 18. Alternatively, the registers 1818 may be organized in any other arrangement, format, or structure, such as by being distributed throughout the core 1802 to shorten access time. The second bus 1822 may be implemented by at least one of an I2C bus, a SPI bus, a PCI bus, or a PCIe bus.

Each core 1802 and/or, more generally, the microprocessor 1800 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1800 is a semiconductor device fabricated to include many transistors interconnected to implement the structures described above in one or more integrated circuits (ICs) contained in one or more packages.

The microprocessor 1800 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1800, in the same chip package as the microprocessor 1800 and/or in one or more separate packages from the microprocessor 1800.

FIG. 19 is a block diagram of another example implementation of the programmable circuitry 1712 of FIG. 17. In this example, the programmable circuitry 1712 is implemented by FPGA circuitry 1900. For example, the FPGA circuitry 1900 may be implemented by an FPGA. The FPGA circuitry 1900 can be used, for example, to perform operations that could otherwise be performed by the example microprocessor 1800 of FIG. 18 executing corresponding machine-readable instructions. However, once configured, the FPGA circuitry 1900 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 1800 of FIG. 18 described above (which is a general purpose device that may be programmed to execute some or all of the machine-readable instructions represented by the flowchart(s) of FIGS. 5-7B and 12A-12B but whose interconnections and logic circuitry are fixed once fabricated), the FPGA circuitry 1900 of the example of FIG. 19 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIGS. 5-7B and 12A-12B. In particular, the FPGA circuitry 1900 may be thought of as an array of logic gates, interconnections, and switches. The switches can be programmed to change how the logic gates are interconnected by the interconnections, effectively forming one or more dedicated logic circuits (unless and until the FPGA circuitry 1900 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 5-7B and 12A-12B. As such, the FPGA circuitry 1900 may be configured and/or structured to effectively instantiate some or all of the operations/functions corresponding to the machine-readable instructions of the flowchart(s) of FIGS. 5-7B and 12A-12B as dedicated logic circuits to perform the operations/functions corresponding to those software instructions in a dedicated manner analogous to an ASIC. Therefore, the FPGA circuitry 1900 may perform the operations/functions corresponding to the some or all of the machine-readable instructions of FIGS. 5-7B and 12A-12B faster than the general-purpose microprocessor can execute the same.

In the example of FIG. 19, the FPGA circuitry 1900 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1900 of FIG. 19 may access and/or load the binary file to cause the FPGA circuitry 1900 of FIG. 19 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1900 of FIG. 19 to cause configuration and/or structuring of the FPGA circuitry 1900 of FIG. 19, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1900 of FIG. 19 may access and/or load the binary file to cause the FPGA circuitry 1900 of FIG. 19 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1900 of FIG. 19 to cause configuration and/or structuring of the FPGA circuitry 1900 of FIG. 19, or portion(s) thereof.

The FPGA circuitry 1900 of FIG. 19, includes example input/output (I/O) circuitry 1902 to obtain and/or output data to/from example configuration circuitry 1904 and/or external hardware 1906. For example, the configuration circuitry 1904 may be implemented by interface circuitry that may obtain a binary file, which may be implemented by a bit stream, data, and/or machine-readable instructions, to configure the FPGA circuitry 1900, or portion(s) thereof. In some such examples, the configuration circuitry 1904 may obtain the binary file from a user, a machine (e.g., hardware circuitry (e.g., programmable or dedicated circuitry) that may implement an Artificial Intelligence/Machine Learning (Al/ML) model to generate the binary file), etc., and/or any combination(s) thereof). In some examples, the external hardware 1906 may be implemented by external hardware circuitry. For example, the external hardware 1906 may be implemented by the microprocessor 1800 of FIG. 18.

The FPGA circuitry 1900 also includes an array of example logic gate circuitry 1908, a plurality of example configurable interconnections 1910, and example storage circuitry 1912. The logic gate circuitry 1908 and the configurable interconnections 1910 are configurable to instantiate one or more operations/functions that may correspond to at least some of the machine-readable instructions of FIGS. 5-7B and 12A-12B and/or other desired operations. The logic gate circuitry 1908 shown in FIG. 19 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1908 to enable configuration of the electrical structures and/or the logic gates to form circuits to perform desired operations/functions. The logic gate circuitry 1908 may include other electrical structures such as look-up tables (LUTs), registers (e.g., flip-flops or latches), multiplexers, etc.

The configurable interconnections 1910 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1908 to program desired logic circuits.

The storage circuitry 1912 of the illustrated example is structured to store result(s) of the one or more of the operations performed by corresponding logic gates. The storage circuitry 1912 may be implemented by registers or the like. In the illustrated example, the storage circuitry 1912 is distributed amongst the logic gate circuitry 1908 to facilitate access and increase execution speed.

The example FPGA circuitry 1900 of FIG. 19 also includes example dedicated operations circuitry 1914. In this example, the dedicated operations circuitry 1914 includes special purpose circuitry 1916 that may be invoked to implement commonly used functions to avoid the need to program those functions in the field. Examples of such special purpose circuitry 1916 include memory (e.g., DRAM) controller circuitry, PCle controller circuitry, clock circuitry, transceiver circuitry, memory, and multiplier-accumulator circuitry. Other types of special purpose circuitry may be present. In some examples, the FPGA circuitry 1900 may also include example general purpose programmable circuitry 1918 such as an example CPU 1920 and/or an example DSP 1922. Other general purpose programmable circuitry 1918 may additionally or alternatively be present such as a GPU, an XPU, etc., that can be programmed to perform other operations.

Although FIGS. 18 and 19 illustrate two example implementations of the programmable circuitry 1712 of FIG. 17, many other approaches are contemplated. For example, FPGA circuitry may include an on-board CPU, such as one or more of the example CPU 1920 of FIG. 18. Therefore, the programmable circuitry 1712 of FIG. 17 may additionally be implemented by combining at least the example microprocessor 1800 of FIG. 18 and the example FPGA circuitry 1900 of FIG. 19. In some such hybrid examples, one or more cores 1802 of FIG. 18 may execute a first portion of the machine-readable instructions represented by the flowchart(s) of FIGS. 5-7B and 12A-12B to perform first operation(s)/function(s), the FPGA circuitry 1900 of FIG. 19 may be configured and/or structured to perform second operation(s)/function(s) corresponding to a second portion of the machine-readable instructions represented by the flowcharts of FIG. 5-7B and 12A-12B, and/or an ASIC may be configured and/or structured to perform third operation(s)/function(s) corresponding to a third portion of the machine-readable instructions represented by the flowcharts of FIGS. 5-7B and 12A-12B.

It should be understood that some or all of the circuitry of FIG. 2 may, thus, be instantiated at the same or different times. For example, same and/or different portion(s) of the microprocessor 1800 of FIG. 18 may be programmed to execute portion(s) of machine-readable instructions at the same and/or different times. In some examples, same and/or different portion(s) of the FPGA circuitry 1900 of FIG. 19 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1800 of FIG. 18 may execute machine-readable instructions in one or more threads executing concurrently and/or in series. In some examples, the FPGA circuitry 1900 of FIG. 19 may be configured and/or structured to carry out operations/functions concurrently and/or in series. Moreover, in some examples, some or all of the circuitry of FIG. 2 may be implemented within one or more virtual machines and/or containers executing on the microprocessor 1800 of FIG. 18.

In some examples, the programmable circuitry 1712 of FIG. 17 may be in one or more packages. For example, the microprocessor 1800 of FIG. 18 and/or the FPGA circuitry 1900 of FIG. 19 may be in one or more packages. In some examples, an XPU may be implemented by the programmable circuitry 1712 of FIG. 17, which may be in one or more packages. For example, the XPU may include a CPU (e.g., the microprocessor 1800 of FIG. 18, the CPU 1920 of FIG. 19, etc.) in one package, a DSP (e.g., the DSP 1922 of FIG. 19) in another package, a GPU in yet another package, and an FPGA (e.g., the FPGA circuitry 1900 of FIG. 19) in still yet another package.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that dynamically charge a battery and/or an energy storage device. Disclosed systems, apparatus, articles of manufacture, and methods improve the efficiency of using a computing device by determining AC or DC charging for a battery to enable charging using both AC and DC power. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to charge with AC and DC current are disclosed herein. Further examples and combinations thereof include the following:
Example 1 includes a system for charging an energy storage device on a vehicle, the system comprising interface circuitry, machine-readable instructions, and at least one processor circuit to be programmed by the machine-readable instructions to detect a direct current (DC) voltage or an alternating current (AC) voltage on or at an input terminal of a vehicle electrical system, the input terminal to receive electrical energy to charge the energy storage device on the vehicle, based on detection of direct current, generate a first pilot signal that includes a first pulse width modulated signal associated with a first mode including a first duty cycle range, based on detection of alternating current, generate a second pilot signal that includes a second pulse width modulated signal associated with a second mode including a second duty cycle range, wherein the first duty cycle range is lower than the second duty cycle range, and charge the energy storage device based on detection of the first pilot signal or the second pilot signal.
Example 2 includes the system of example 1, wherein the first mode includes a DC charging mode, and the second mode includes an AC charging mode.
Example 3 includes the system of examples 1 and 2, wherein, based on the detection of the first pilot signal or the second pilot signal, the at least one processor circuit is to actuate a switch to a first state to operate the system in the first mode or to a second state to operate the system in the second mode, respectively.
Example 4 includes the system of example 3, further including an inverter, wherein the inverter is to convert the AC voltage to the DC voltage based on the switch being in the second state.
Example 5 includes the system of example 3, wherein the first state is associated with a first observed duty cycle range of about three percent duty cycle to about seven percent duty cycle.
Example 6 includes the system of example 3, wherein the second state is associated with a second observed duty cycle range of about eight percent to about ninety seven percent.
Example 7 includes the system of examples 1-6, wherein, to charge the energy storage device, the at least one processor circuit is to charge the energy storage device in one of the second mode or the first mode based on detection of the first pilot signal or the second pilot signal.
Example 8 includes the system of examples 1-7, wherein to charge the energy storage device, the one or more processor circuit is to charge the energy storage device in a first mode, and after charging the energy storage device in the first mode, charge the energy storage device in the second mode, wherein charging in the second mode is based on a temperature of the system exceeding a threshold temperature.
Example 9 includes the system of examples 1-8, wherein to charge the energy storage device, the one or more processor circuit is to charge the energy storage device in a second mode, and after charging the energy storage device in the second mode, charge the energy storage device in the first mode, wherein charging in the first mode is based on a temperature of the system falling below a threshold temperature.
Example 10 includes at least one non-transitory machine-readable medium comprising machine-readable instructions to cause at least one processor circuit to at least detect a direct current (DC) voltage or an alternating current (AC) voltage on or at an input terminal of a vehicle electrical system, the input terminal to receive electrical energy to charge an energy storage device on a vehicle, based on detection of direct current, generate a first pilot signal that includes a first pulse width modulated signal associated with a first mode including a first duty cycle range, based on detection of alternating current, generate a second pilot signal that includes a second pulse width modulated signal associated with a second mode including a second duty cycle range, wherein the first duty cycle range is lower than the second duty cycle range, and charge the energy storage device based on detection of the first pilot signal or the second pilot signal.
Example 11 includes the at least one non-transitory machine-readable medium of example 10, wherein the first mode includes a DC charging mode, and the second mode includes an AC charging mode.
Example 12 includes the at least one non-transitory machine-readable medium of examples 10 and 11, wherein the machine-readable instructions are to cause, based on the detection of the first pilot signal or the second pilot signal, the at least one processor circuit is to actuate a switch to a first state to operate the vehicle electrical system in the first mode or to a second state to operate the vehicle electrical system in the second mode, respectively.
Example 13 includes the at least one non-transitory machine-readable medium of example 12, wherein the machine-readable instructions are to cause the at least one processor circuit to convert the AC voltage to the DC voltage based on the switch being in the second state.
Example 14 includes the at least one non-transitory machine-readable medium of example 12, wherein the first state is associated with a first observed duty cycle range of about three percent duty cycle to about seven percent duty cycle.
Example 15 includes the at least one non-transitory machine-readable medium of example 12, wherein the second state is associated with a second observed duty cycle range of about eight percent to about ninety seven percent.
Example 16 includes the at least one non-transitory machine-readable medium of examples 10-15, wherein the machine-readable instructions, to charge the energy storage device, are to cause the at least one processor circuit to charge the energy storage device in one of the second mode or the first mode based on detection of the first pilot signal or the second pilot signal.
Example 17 includes the at least one non-transitory machine-readable medium of examples 10-16, wherein the machine-readable instructions, to charge the energy storage device, are to cause one or more of the at least one processor circuit to charge the energy storage device in a first mode, and after charging the energy storage device in the first mode, charge the energy storage device in the second mode, wherein charging in the second mode is based on a temperature of the vehicle electrical system exceeding a threshold temperature.
Example 18 includes the at least one non-transitory machine-readable medium of examples 10-17, wherein the machine-readable instructions, to charge the energy storage device, are to cause the at least one processor circuit to charge the energy storage device in a second mode, and after charging the energy storage device in the second mode, charge the energy storage device in the first mode, wherein charging in the first mode is based on a temperature of the vehicle electrical system falling below a threshold temperature.
Example 19 includes a method comprising detecting a direct current (DC) voltage or an alternating current (AC) voltage on or at an input terminal of a vehicle electrical system, the input terminal to receive electrical energy to charge an energy storage device on a vehicle, based on detection of direct current, generating a first pilot signal that includes a first pulse width modulated signal associated with a first mode including a first duty cycle range, based on detection of alternating current, generating a second pilot signal that includes a second pulse width modulated signal associated with a second mode including a second duty cycle range, wherein the first duty cycle range is lower than the second duty cycle range, and charging the energy storage device based on detection of the first pilot signal or the second pilot signal.
Example 20 includes the method of example 19, wherein the first mode includes a DC charging mode, and the second mode includes an AC charging mode.
Example 21 includes the method of examples 19 and 20, wherein the machine-readable instructions are to cause, based on the detection of the first pilot signal or the second pilot signal, one of more of the at least one processor circuit is to actuate a switch to a first state to operate the vehicle electrical system in the first mode or to a second state to operate the vehicle electrical system in the second mode, respectively.
Example 22 includes the method of example 21, wherein the machine-readable instructions are to cause one or more of the at least one processor circuit to convert the AC voltage to the DC voltage based on the switch being in the second state.
Example 23 includes the method of example 21, wherein the first state is associated with a first observed duty cycle range of about three percent duty cycle to about seven percent duty cycle.
Example 24 includes the method of example 21, wherein the second state is associated with a second observed duty cycle range of about eight percent to about ninety seven percent.
Example 25 includes the method of examples 19-24, wherein the machine-readable instructions, to charge the energy storage device, are to cause one or more of the at least one processor circuit to charge the energy storage device in one of the second mode or the first mode based on detection of the first pilot signal or the second pilot signal.
Example 26 includes the method of examples 19-25, wherein the machine-readable instructions, to charge the energy storage device, are to cause one or more of the at least one processor circuit to charge the energy storage device in a first mode, and after charging the energy storage device in the first mode, charge the energy storage device in the second mode, wherein charging in the second mode is based on a temperature of the vehicle electrical system exceeding a threshold temperature.
Example 27 includes the method of examples 19-26, wherein the machine-readable instructions, to charge the energy storage device, are to cause one or more of the at least one processor circuit to charge the energy storage device in a second mode, and after charging the energy storage device in the second mode, charge the energy storage device in the first mode, wherein charging in the first mode is based on a temperature of the vehicle electrical system falling below a threshold temperature.
Example 28 includes an apparatus for charging an energy storage device on a vehicle, the system comprising interface circuitry, machine-readable instructions, and at least one processor circuit to be programmed by the machine-readable instructions to detect a direct current (DC) voltage or an alternating current (AC) voltage on or at an input terminal of a vehicle electrical system, the input terminal to receive electrical energy to charge the energy storage device on the vehicle, based on detection of direct current, generate a first pilot signal that includes a first pulse width modulated signal associated with a first mode including a first duty cycle range, based on detection of alternating current, generate a second pilot signal that includes a second pulse width modulated signal associated with a second mode including a second duty cycle range, wherein the first duty cycle range is lower than the second duty cycle range, and charge the energy storage device based on detection of the first pilot signal or the second pilot signal.
Example 29 includes the apparatus of example 28, wherein the first mode includes a DC charging mode, and the second mode includes an AC charging mode.
Example 30 includes the apparatus of examples 28 and 29, wherein, based on the detection of the first pilot signal or the second pilot signal, one of more of the at least one processor circuit is to actuate a switch to a first state to operate the system in the first mode or to a second state to operate the system in the second mode, respectively.
Example 31 includes the apparatus of example 30, further including an inverter, wherein the inverter is to convert the AC voltage to the DC voltage based on the switch being in the second state.
Example 32 includes the apparatus of example 30, wherein the first state is associated with a first observed duty cycle range of about three percent duty cycle to about seven percent duty cycle.
Example 33 includes the apparatus of example 30, wherein the second state is associated with a second observed duty cycle range of about eight percent to about ninety seven percent.
Example 34 includes the apparatus of examples 28-33, wherein, to charge the energy storage device, the one or more processor circuit is to charge the energy storage device in one of the second mode or the first mode based on detection of the first pilot signal or the second pilot signal.
Example 35 includes the apparatus of examples 28-34, wherein to charge the energy storage device, the one or more processor circuit is to charge the energy storage device in a first mode, and after charging the energy storage device in the first mode, charge the energy storage device in the second mode, wherein charging in the second mode is based on a temperature of the system exceeding a threshold temperature.
Example 36 includes the apparatus of examples 28-35, wherein to charge the energy storage device, the one or more processor circuit is to charge the energy storage device in a second mode, and after charging the energy storage device in the second mode, charge the energy storage device in the first mode, wherein charging in the first mode is based on a temperature of the system falling below a threshold temperature.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A system for charging an energy storage device on a vehicle, the system comprising:
interface circuitry;
machine-readable instructions; and
at least one processor circuit to be programmed by the machine-readable instructions to:
detect a direct current (DC) voltage or an alternating current (AC) voltage on or at an input terminal of a vehicle electrical system, the input terminal to receive electrical energy to charge the energy storage device on the vehicle;
based on detection of direct current, generate a first pilot signal that includes a first pulse width modulated signal associated with a first mode including a first duty cycle range;
based on detection of alternating current, generate a second pilot signal that includes a second pulse width modulated signal associated with a second mode including a second duty cycle range, wherein the first duty cycle range is lower than the second duty cycle range; and
charge the energy storage device based on detection of the first pilot signal or the second pilot signal.

2. The system of claim 1, wherein the first mode includes a DC charging mode, and the second mode includes an AC charging mode.

3. The system of claim 1, wherein, based on the detection of the first pilot signal or the second pilot signal, the at least one processor circuit is to actuate a switch to a first state to operate the system in the first mode or to a second state to operate the system in the second mode, respectively.

4. The system of claim 3, wherein the switch is instantiated by at least one of a double-pole switch; a double-throw relay; a double-pole, double-throw contactor; a set of double-pole, single-throw relays; a set of double-pole, single-throw contactors; a first semiconductor switch for the second mode; a second semiconductor switch for the first mode; a thyristor; a solid state AC relay; and/or a solid state DC relay.

5. The system of claim 3, wherein the switch includes a relay and/or a contactor with an auxiliary contact that is indicative of an on state or an off state of the relay and/or the contactor.

6. The system of claim 3, wherein the first state is associated with a first observed duty cycle range of about three percent duty cycle to about seven percent duty cycle and the second state is associated with a second observed duty cycle range of about eight percent to about ninety seven percent.

7. The system of claim 1, wherein, to charge the energy storage device, the at least one processor circuit is to charge the energy storage device in one of the second mode or the first mode based on detection of the first pilot signal or the second pilot signal.

8. The system of claim 1, wherein to charge the energy storage device, the at least one processor circuit is to:
charge the energy storage device in a first mode; and
after charging the energy storage device in the first mode, charge the energy storage device in the second mode, wherein charging in the second mode is based on a temperature of the system exceeding a threshold temperature.

9. The system of claim 1, wherein to charge the energy storage device, the one or more processor circuit is to:
charge the energy storage device in a second mode; and
after charging the energy storage device in the second mode, charge the energy storage device in the first mode, wherein charging in the first mode is based on a temperature of the system falling below a threshold temperature.

10. At least one non-transitory machine-readable medium comprising machine-readable instructions to cause at least one processor circuit to at least:
detect a direct current (DC) voltage or an alternating current (AC) voltage on or at an input terminal of a vehicle electrical system, the input terminal to receive electrical energy to charge an energy storage device on a vehicle;
based on detection of direct current, generate a first pilot signal that includes a first pulse width modulated signal associated with a first mode including a first duty cycle range;
based on detection of alternating current, generate a second pilot signal that includes a second pulse width modulated signal associated with a second mode including a second duty cycle range, wherein the first duty cycle range is lower than the second duty cycle range; and
charge the energy storage device based on detection of the first pilot signal or the second pilot signal.

11. The at least one non-transitory machine-readable medium of claim 10, wherein the first mode includes a DC charging mode, and the second mode includes an AC charging mode.

12. The at least one non-transitory machine-readable medium of claim 10, wherein the machine-readable instructions are to cause, based on the detection of the first pilot signal or the second pilot signal, the at least one processor circuit to actuate a switch to a first state to operate the vehicle electrical system in the first mode or to a second state to operate the vehicle electrical system in the second mode, respectively.

13. The at least one non-transitory machine-readable medium of claim 12, wherein the machine-readable instructions are to cause the at least one processor circuit to convert the AC voltage to the DC voltage based on the switch being in the second state.

14. The at least one non-transitory machine-readable medium of claim 12, wherein the first state is associated with a first observed duty cycle range of about three percent duty cycle to about seven percent duty cycle.

15. The at least one non-transitory machine-readable medium of claim 12, wherein the second state is associated with a second observed duty cycle range of about eight percent to about ninety seven percent.

## Amended claims

### Amended claims in accordance with Rule 137(2) EPC.

1. A system (111, 211, 311, 411, 511, 611) for charging an energy storage device (50, 150) on a vehicle (110), the system comprising:
the vehicle (110) with an electrical system (14, 314) with common input terminals (17, 18) for receiving electrical energy as DC voltage or AC voltage from a charging station (10) to charge an energy storage device (50, 150) on the vehicle;
the charging station (10) configured to provide the DC or the AC voltage on or at the common input terminals (17, 18);
a charge controller (24) at the charging station (10) with a processor circuit (1800) programmed by machine-readable instructions, the charge controller (24) connected to a sensor (20) configured to detect a direct current (DC) voltage or an alternating current (AC) voltage on or at the input terminals (17, 18) of the vehicle electrical system; based on detection of direct current voltage, generate a first charge pilot signal that includes a first pulse width modulated signal associated with a first mode including a first duty cycle range; and based on detection of alternating current voltage, generate a second charge pilot signal that includes a second pulse width modulated signal associated with a second mode including a second duty cycle range, wherein the first duty cycle range is lower than the second duty cycle range;
controller circuitry (23, 40) of the vehicle configured to control charging of the energy storage device (50, 150) of the vehicle based on detection of the first pilot signal or the second pilot signal, wherein the first mode includes a DC charging mode in which the DC voltage received at the input terminals (17, 18) of the vehicle electric system (14, 314) is directly applied to the energy storage device (50, 150), and the second mode includes an AC charging mode in which the AC voltage received at the input terminals (17, 18) of the vehicle electric system (14, 314) is converted by a rectifier of an on-board charger (40) of the vehicle to a DC voltage for application to the energy storage device (50, 150),
wherein, based on the detection of the first pilot signal or the second pilot signal, the controller circuitry (23, 40) is configured to actuate a vehicle charging switch (28) to a first state to operate the system in the first mode in which the energy storage device (50, 150) is connected to the input terminals (17, 18) and to a second state to operate the system in the second mode in which the on-board charger (40) is connected to the input terminals (17, 18) and the energy storage device (50, 150) is electrically separated from the input terminals (17, 18), respectively,
**characterized in that** in the first state of the vehicle charging switch (28) the on-board charger (40) is electrically separated from the input terminals (17, 18).

2. The system of claim 2, wherein the vehicle charging switch (28) is instantiated by at least one of a double-pole switch; a double-throw relay; a double-pole, double-throw contactor; a set of double-pole, single-throw relays; a set of double-pole, single-throw contactors; a first semiconductor switch for the second mode; a second semiconductor switch for the first mode; a thyristor; a solid state AC relay; and/or a solid state DC relay.

3. The system of claim 2, wherein the vehicle charging switch (28) includes a relay and/or a contactor with an auxiliary contact (154) that is indicative of an on state or an off state of the relay and/or the contactor.

4. The system of claim 1, wherein the first state is associated with a first observed duty cycle range of about three percent duty cycle to about seven percent duty cycle and the second state is associated with a second observed duty cycle range of about eight percent to about ninety seven percent.

5. The system of claim 1, wherein to charge the energy storage device (50, 150), the at least one processor circuit is to:
charge the energy storage device (50, 150) in the first mode; and
after charging the energy storage device (50, 150) in the first mode, charge the energy storage device (50, 150) in the second mode, wherein charging in the second mode is based on a temperature of the system exceeding a threshold temperature.

6. The system of claim 1, wherein to charge the energy storage device (50, 150), the one or more processor circuit is to:
charge the energy storage device (50, 150) in the second mode; and
after charging the energy storage device (50, 150) in the second mode, charge the energy storage device (50, 150) in the first mode, wherein charging in the first mode is based on a temperature of the system falling below a threshold temperature.
